(19) Europäisches Patentamt
European Patent Office
Office européen des brevets

(11) **EP 4 310 550 A1**

(12) **EUROPEAN PATENT APPLICATION**
published in accordance with Art. 153(4) EPC

(43) Date of publication:
**24.01.2024 Bulletin 2024/04**

(21) Application number: **21931426.7**

(22) Date of filing: **15.03.2021**

(51) International Patent Classification (IPC):
**G01S 17/89** (2020.01)   **G01S 17/95** (2006.01)

(52) Cooperative Patent Classification (CPC):
**G01S 17/89; G01S 17/95**

(86) International application number:
**PCT/JP2021/010365**

(87) International publication number:
**WO 2022/195670 (22.09.2022 Gazette 2022/38)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **Pioneer Corporation**
**Tokyo 113-0021 (JP)**
• **Pioneer Smart Sensing Innovations Corporation**
**Tokyo 113-0021 (JP)**

(72) Inventors:
• **KATO, Masahiro**
**Kawagoe-shi, Saitama 350-8555 (JP)**

• **KODA, Takeshi**
**Kawagoe-shi, Saitama 350-8555 (JP)**
• **KATO, Masahiro**
**Kawagoe-shi, Saitama 350-8555 (JP)**
• **GOTODA, Akira**
**Kawagoe-shi, Saitama 350-8555 (JP)**
• **SHIRATORI, Kunio**
**Tokyo 113-0021 (JP)**

(74) Representative: **Viering, Jentschura & Partner
mbB**
**Patent- und Rechtsanwälte**
**Am Brauhaus 8**
**01099 Dresden (DE)**

(54) **INFORMATION PROCESSING APPARATUS, CONTROL METHOD, PROGRAM, AND STORAGE MEDIUM**

(57)    In the information processing device, the point cloud data acquisition means acquires point cloud data generated by a measurement device provided on a ship. The water-surface reflection data extraction means extracts data obtained by measuring a position which is a predetermined distance away from a shore and which is within a predetermined distance from a measurement position of the measurement device, as a water-surface reflection data measured by reflection at a water surface. Then, the water-surface height calculation means calculates a water-surface height based on the water-surface reflection data.

FIG. 7A

**(Cont. next page)**

# FIG. 7B

DIRECT WATER-SURFACE
REFLECTION DATA

## Description

TECHNICAL FIELD

The present disclosure relates to processing of data measured in a ship.

BACKGROUND ART

Conventionally, there is known a technique for estimating a self-position of a movable object by matching shape data of a peripheral object measured using a measuring device such as a laser scanner with map information in which the shape of the surrounding object is stored in advance. For example, Patent Document 1 discloses an autonomous movement system, which determines whether or not an object detected in the voxel obtained by dividing the space with a predetermined rule is a stationary object or a movable object, and performs matching of the map information and the measurement data for the voxel in which the stationary object is present. Further, Patent Document 2 discloses a scan matching method for performing self-position estimation by collation between the voxel data including an average vector and a covariance matrix of a stationary object for each voxel and the point cloud data outputted by the lidar. Furthermore, Patent Document 3 discloses a technique for changing an attitude of a ship, in an automatic berthing device for performing automatic berthing of the ship, so that the light irradiated from the lidar can be reflected by the object around the berthing position and received by the lidar.

PRECEDING TECHNICAL REFERENCES

PATENT DOCUMENT

Patent Document 1: International Publication No. WO2013/076829
Patent Document 2: International Publication No. WO2018/221453
Patent Document 3: Japanese Patent Application Laid-Open under No. 2020-59403

SUMMARY

PROBLEM TO BE SOLVED

Recently, studies on an automatic maneuvering system have been promoted not only in the field of automobiles but also in ships, and self-position estimation with good accuracy is equally important for safe automatic ship maneuvering. In the open sea, there are few structures in the surroundings, and it is possible to measure the self-position by GNSS (Global Navigation Satellite System). However, in urban coasts and rivers, since high-rise buildings or the like are adjoined to each other, the reception condition of GNSS radio waves is bad due to lowering of the number of receiving satellites and multipath, and positioning with good accuracy is often impossible. Therefore, even in the case of a ship, highly accurate position estimation by the above scan matching is preferably applied.

On the other hand, when a lidar is mounted on a ship, a part of the beam of the lidar directed downward is reflected by the water surface, and the detected data from the place that does not actually exist is obtained. The data by such water-surface reflection is false detection (false alarm) data, which affects the accuracy of the self-position estimation. In order to judge whether or not the detected data is false detection, it is necessary to estimate the height of the water surface with high accuracy.

The present disclosure has been made to solve the problems as described above, and a main object thereof is to provide an information processing device capable of estimating the height of the water surface with high accuracy.

MEANS FOR SOLVING THE PROBLEM

The invention described in claim is an information processing device including: a point cloud data acquisition means configured to acquire point cloud data generated by a measurement device provided on a ship; a water-surface reflection data extraction means configured to extract data obtained by measuring a position which is a predetermined distance away from a shore and which is within a predetermined distance from a measurement position of the measurement device, as a water-surface reflection data measured by reflection at a water surface; and a water-surface height calculation means configured to calculate a water-surface height based on the water-surface reflection data.

The invention described in claim is a control method executed by a computer, comprising: acquiring point cloud data generated by a measurement device provided on a ship; extracting data obtained by measuring a position which is a predetermined distance away from a shore and which is within a predetermined distance from a measurement position of the measurement device, as a water-surface reflection data measured by reflection at a water surface; and calculating a water-surface height based on the water-surface reflection data.

The invention described in claim is a program causing a computer to execute processing of: acquiring point cloud data generated by a measurement device provided on a ship; extracting data obtained by measuring a position which is a predetermined distance away from a shore and which is within a predetermined distance from a measurement position of the measurement device, as a water-surface reflection data measured by reflection at a water surface; and calculating a water-surface height based on the water-surface reflection data.

BRIEF DESCRIPTION OF THE DRAWINGS

[FIG. 1] FIG. 1 is a schematic configuration of a driving assistance system.
[FIG. 2] FIG. 2 is a block diagram showing a configuration of an information processing device.
[FIG. 3] FIG. 3 is a diagram showing a self-position to be estimated by a self-position estimation unit in three-dimensional orthogonal coordinates.
[FIG. 4] FIG. 4 shows an example of a schematic data structure of voxel data.
[FIG. 5] FIGS. 5A to 5C are diagrams for explaining water-surface height viewed from the lidar.
[FIG. 6] FIGS. 6A and 6B are diagrams for explaining water-surface reflection of emitted light of the lidar.
[FIG. 7] FIGS. 7A and 7B are diagrams for explaining point cloud data used for estimating the water-surface height.
[FIG. 8] FIGS. 8A and 8B are diagrams for explaining a method of detecting an obstacle.
[FIG. 9] FIGS. 9A and 9B are diagrams for explaining a method of detecting ship-wave.
[FIG. 10] FIG. 10 is a block diagram showing a functional configuration of an obstacle/ship-wave detection unit.
[FIG. 11] FIG. 11A and 11B are diagrams for explaining a method of determining a search range.
[FIG. 12] FIG. 12 shows a result of a simulation to detect a straight-line by Hough transform.
[FIG. 13] FIGS. 13A to 13C are examples of Euclidean clustering.
[FIG. 14] FIGS. 14A and 14B show simulation results of Euclidean clustering.
[FIG. 15] FIG. 15 is a diagram showing a relationship between a distance and an interval of point cloud data of an object.
[FIG. 16] FIGS. 16A and 16B show simulation results for a case where a grouping threshold and a point-number threshold are fixed and for a case where they are adaptively set.
[FIG. 17] FIGS. 17A and 17B show water-surface reflection data obtained around the ship.
[FIG. 18] FIG. 18 shows a method for removing ship-waves and obstacles from the water-surface reflection data.
[FIG. 19] FIG. 19 is a flowchart of obstacle/ship-wave detection processing.
[FIG. 20] FIG. 20 is a flowchart of the ship-wave detection process.
[FIG. 21] FIG. 21 is a diagram for explaining a method of detecting a straight-line.
[FIG. 22] FIG. 22 is a flowchart of the obstacle detection process.
[FIG. 23] FIG, 23 is a flowchart of the water-surface position estimation process.
[FIG. 24] FIGS. 24A to 24C shows a flowchart and an explanatory diagram of the ship-wave information calculation process.
[FIG. 25] FIG. 25 is a flowchart of the obstacle information calculation process.
[FIG. 26] FIG. 26 is an explanatory view of the water-surface position estimation method according to a modification 1.
[FIG. 27] FIG. 27 shows an example of the ship-wave detection according to the modification 2.

MODES TO EXECUTE THE INVENTION

According to an aspect of the present invention, there is provided an information processing device comprising: a point cloud data acquisition means configured to acquire point cloud data generated by a measurement device provided on a ship; a water-surface reflection data extraction means configured to extract data obtained by measuring a position which is a predetermined distance away from a shore and which is within a predetermined distance from a measurement position of the measurement device, as a water-surface reflection data measured by reflection at a water surface; and a water-surface height calculation means configured to calculate a water-surface height based on the water-surface reflection data.

In the information processing device, the point cloud data acquisition means acquires point cloud data generated by a measurement device provided on a ship. The water-surface reflection data extraction means extracts data obtained by measuring a position which is a predetermined distance away from a shore and which is within a predetermined distance from a measurement position of the measurement device, as a water-surface reflection data measured by reflection at a water surface. Then, the water-surface height calculation means calculates a water-surface height based on the water-surface reflection data. Thus, the water-surface height can be calculated with high accuracy using the water-surface reflection data.

In one mode of the above information processing device, the water-surface height calculation means calculates an average of the values of the water-surface reflection data in a height direction as the water-surface height. In another mode, the water-surface height calculation means calculates an average and a variance of the values in the height direction of the water-surface reflection data, and calculates the average as the water-surface height when the variance is smaller than a predetermined value.

Still another mode of the above information processing device further includes a detection means configured to set a search range based on the measurement position and the water-surface height, and detect an obstacle and a ship-wave based on the point cloud data belonging to the search range. In this mode, the water-surface height can be used to detect obstacles and ship-waves.

In still another mode of the above information processing device, the detection means determines whether or not the point cloud data belonging to the search range forms a linear shape, and detects a linear point cloud data as a ship-wave when the linear point cloud data exists for a predetermined time. Also, the detection means determines whether or not the point cloud data belonging to the search range forms a cluster, and detects a point cloud data forming the cluster as an obstacle when the point cloud data forming the cluster exists for a predetermined time.

In still another mode of the above information processing device, the detection means changes a height range of the search range based on a variance of a value in a height direction of the water-surface reflection data. Thus, an appropriate search range can be set according to the height of the wave.

According to another aspect of the present invention, there is provided a control method executed by a computer, including: acquiring point cloud data generated by a measurement device provided on a ship; extracting data obtained by measuring a position which is a predetermined distance away from a shore and which is within a predetermined distance from a measurement position of the measurement device, as a water-surface reflection data measured by reflection at a water surface; and calculating a water-surface height based on the water-surface reflection data. Thus, the water-surface height can be calculated with high accuracy using the water-surface reflection data.

According to still another aspect of the present invention, there is provided a program causing a computer to execute processing of: acquiring point cloud data generated by a measurement device provided on a ship; extracting data obtained by measuring a position which is a predetermined distance away from a shore and which is within a predetermined distance from a measurement position of the measurement device, as a water-surface reflection data measured by reflection at a water surface; and calculating a water-surface height based on the water-surface reflection data. By executing this program on a computer, the above-described information processing device can be realized. The program can be stored and handled on a storage medium.

EMBODIMENTS

Preferred embodiments of the present invention will be described with reference to the accompanying drawings. It is noted that a symbol (symbol "A") to which "^" or "-" is attached at its top will be denoted as "A^" or "A⁻" for convenience in this specification.

(1) Overview of driving assistance system

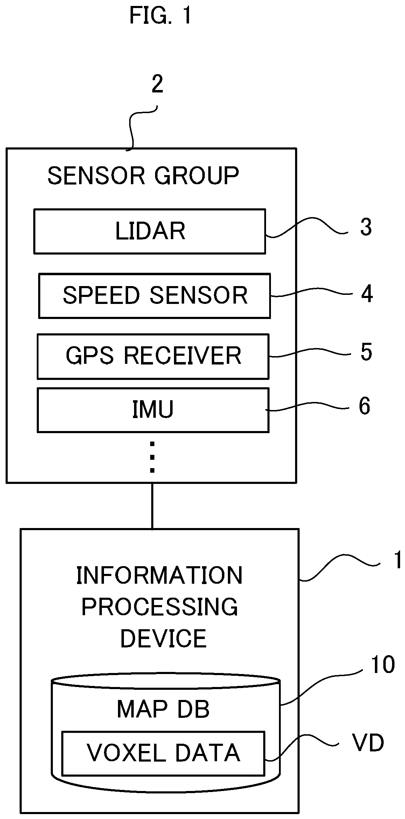

FIG. 1 is a schematic configuration of a driving assistance system according to the present embodiment. The driving assistance system includes an information processing device 1 that moves together with a ship serving as a mobile body, and a sensor group 2 mounted on the ship. Hereafter, a ship that moves together with the information processing device 1 is also referred to as a "target ship".

The information processing device 1 is electrically connected to the sensor group 2, and estimates the position (also referred to as a "self-position") of the target ship in which the information processing device 1 is provided, based on the outputs of various sensors included in the sensor group 2. Then, the information processing device 1 performs driving assistance such as autonomous driving control of the target ship on the basis of the estimation result of the self-position. The driving assistance includes berthing assistance such as automatic berthing. Here, "berthing" includes not only the case of berthing the target ship to the wharf but also the case of berthing the target ship to a structural body such as a pier. The information processing device 1 may be a navigation device provided in the target ship or an electronic control device built in the ship.

The information processing device 1 stores a map database (DB: DataBase 10) including voxel data "VD". The voxel data VD is the data which records the position data of the stationary structures in each voxel. The voxel represents a cube (regular lattice) which is the smallest unit of three-dimensional space. The voxel data VD includes the data representing the measured point cloud data of the stationary structures in the voxels by the normal distribution. As will be described later, the voxel data is used for scan matching using NDT (Normal Distributions Transform). The information processing device 1 performs, for example, estimation of a position on a plane, a height position, a yaw angle, a pitch angle, and a roll angle of the target ship by NDT scan matching. Unless otherwise indicated, the self-position includes the attitude angle such as the yaw angle of the target ship.

The sensor group 2 includes various external and internal sensors provided on the target ship. In this embodiment, the sensor group 2 includes a Lidar (Light Detection and Ranging or Laser Illuminated Detection And Ranging) 3, a speed sensor 4 that detects the speed of the target ship, a GPS (Global Positioning Satellite) receiver 5, and an IMU (Inertial Measurement Unit) 6 that measures the acceleration and angular velocity of the target ship in three-axis directions.

By emitting a pulse laser with respect to a predetermined angular range in the horizontal and vertical directions, the Lidar 3 discretely measures the distance to the object existing in the outside world and generates three-dimensional point cloud data indicating the position of the object. In this case, the Lidar 3 includes an irradiation unit for irradiating a laser beam while changing the irradiation direction, a light receiving unit for receiving the reflected light (scattered light) of the irradiated laser beam, and an output unit for outputting scan data (a point constituting the point cloud data. Hereinafter referred to as "measurement point") based on the light receiving signal outputted by the light receiving unit. The measurement point is generated based on the irradiation direction corresponding to the laser beam received by the light receiving unit and the response delay time of the laser beam identified based on the received light signal described above. In general, the closer the distance to the object is, the higher the accuracy of the distance measurement value of the Lider is. The farther the distance is, the lower the accuracy is. The Lidar 3 is an example of a "measurement device" in the present invention. The speed sensor 4 may be, for example, a Doppler based speed meter, or a GNSS based speed meter.

The sensor group 2 may have a receiver that generates the positioning result of GNSS other than GPS, instead of the GPS receiver 5.

(2) Configuration of the information processing device

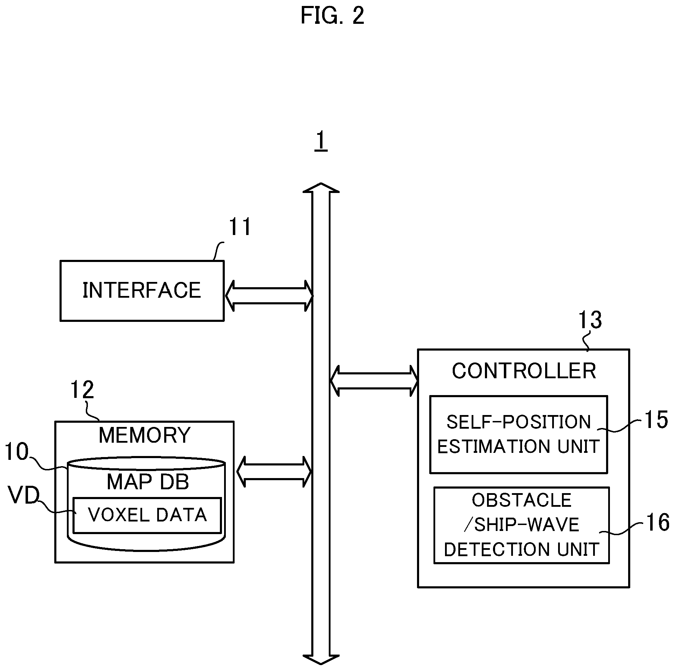

FIG. 2 is a block diagram illustrating an example of a hardware configuration of the information processing device 1. The information processing device 1 mainly includes an interface 11, a memory 12, and a controller 13. Each of these elements is connected to each other through a bus line.

The interface 11 performs the interface operation related to the transfer of data between the information processing device 1 and the external device. In the present embodiment, the interface 11 acquires the output data from the sensors of the sensor group 2 such as the Lidar 3, the speed sensor 4, the GPS receiver 5, and the IMU 6, and supplies the data to the controllers 13. The interface 11 also supplies, for example, the signals related to the control of the target ship generated by the controller 13 to each component of the target ship to control the operation of the target ship. For example, the target ship includes a driving source such as an engine or an electric motor, a screw for generating a propulsive force in the traveling direction based on the driving force of the driving source, a thruster for generating a lateral propulsive force based on the driving force of the driving source, and a rudder which is a mechanism for freely setting the traveling direction of the ship. During the automatic driving such as automatic berthing, the interface 11 supplies the control signal generated by the controller 13 to each of these components. In the case where an electronic control device is provided in the target ship, the interface 11 supplies the control signals generated by the controller 13 to the electronic control device. The interface 11 may be a wireless interface such as a network adapter for performing wireless communication, or a hardware interface such as a cable for connecting to an external device. Also, the interface 11 may perform the interface operations with various peripheral devices such as an input device, a display device, a sound output device, and the like.

The memory 12 may include various volatile and non-volatile memories such as a RAM (Random Access Memory), a ROM (Read Only Memory), a hard disk drive, a flash memory, and the like. The memory 12 stores a program for the controller 13 to perform a predetermined processing. The program executed by the controller 13 may be stored in a storage medium other than the memory 12.

The memory 12 also stores a map DB 10 including the voxel data VD. The map DB 10 stores, for example, information about berthing locations (including shores, piers) and information about waterways in which ships can move, in addition to the voxel-data VD. The map DB 10 may be stored in a storage device external to the information processing device 1, such as a hard disk connected to the information processing device 1 through the interface 11. The above storage device may be a server device that communicates with the information processing device 1. Further, the above storage device may be configured by a plurality of devices. The map DB 10 may be updated periodically. In this case, for example, the controller 13 receives the partial map information about the area, to which the self-position belongs, from the server device that manages the map information via the interface 11, and reflects it in the map DB 10.

In addition to the map DB 10, the memory 12 stores information required for the processing performed by the information processing device 1 in the present embodiment. For example, the memory 12 stores information used for setting the size of the down-sampling, which is performed on the point cloud data obtained when the Lidar 3 performs scanning for one period.

The controller 13 includes one or more processors, such as a CPU (Central Processing Unit), a GPU (Graphics Processing Unit), and a TPU (Tensor Processing Unit, and controls the entire information processing device 1. In this case, the controller 13 performs processing related to the self-position estimation and the driving assistance by executing programs stored in the memory 12.

Further, the controller 13 functionally includes a self-position estimation unit 15, and an obstacle/ship-wave detection unit 16. The controller 13 functions as "point cloud data acquisition means", "water-surface reflection data extraction means", "water surface height calculation means", "detection means" and a computer for executing the program.

The self-position estimation unit 15 estimates the self-position by performing scan matching (NDT scan matching) based on NDT on the basis of the point cloud data based on the output of the Lidar 3 and the voxel data VD corresponding to the voxel to which the point cloud data belongs. Here, the point cloud data to be processed by the self-position estimation unit 15 may be the point cloud data generated by the Lidar 3 or may be the point cloud data obtained by after down-sampling the point cloud data.

The obstacle/ship-wave detection unit 16 detects obstacles and ship-waves around the ship using the point cloud data outputted by the Lidar 3.

(3) Self-position estimation

Next, the self position estimation based on NDT scan matching executed by the self-position estimation unit 15 will be described.

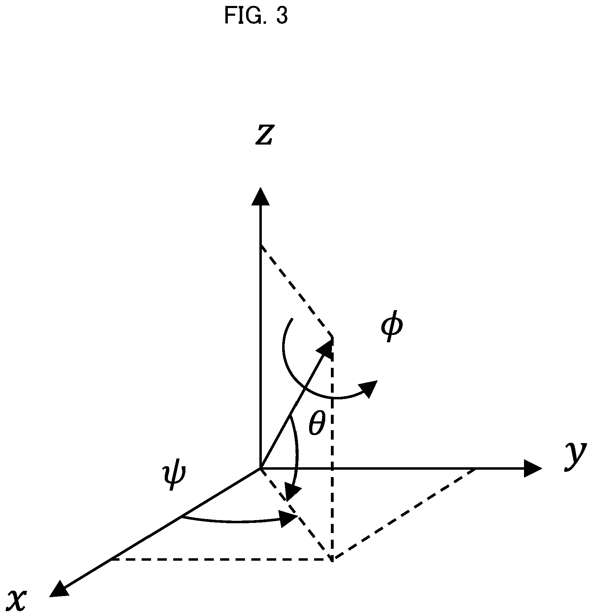

FIG. 3 is a diagram in which a self-position to be estimated by the self-position estimation unit 15 is represented by three-dimensional orthogonal coordinates. As shown in FIG. 3, the self-position in the plane defined on the three-dimensional orthogonal coordinates of xyz is represented by the coordinates "(x,y,z)", the roll angle "$\varphi$", the pitch angle "$\theta$", and the yaw angle (azimuth) "$\psi$" of the target ship. Here, the roll angle $\varphi$ is defined as the rotation angle in which the traveling direction of the target ship is taken as the axis. The pitch angle $\theta$ is defined as the elevation angle in the traveling direction of the target ship with respect to xy plane, and the yaw angle $\psi$ is defined as the angle formed by the traveling direction of the target ship and the x-axis. The coordinates (x,y,z) are in the world coordinates indicating the absolute position corresponding to a combination of latitude, longitude, and altitude, or the position expressed by using a predetermined point as the origin, for example. Then, the self-position estimation unit 15 performs the self-position estimation using these x, y, z, $\varphi$, $\theta$, and $\psi$ as the estimation parameters.

Next, the voxel data VD used for the NDT scan matching will be described. The voxel data VD includes the data which expressed the measured point cloud data of the stationary structures in each voxel by the normal distribution.

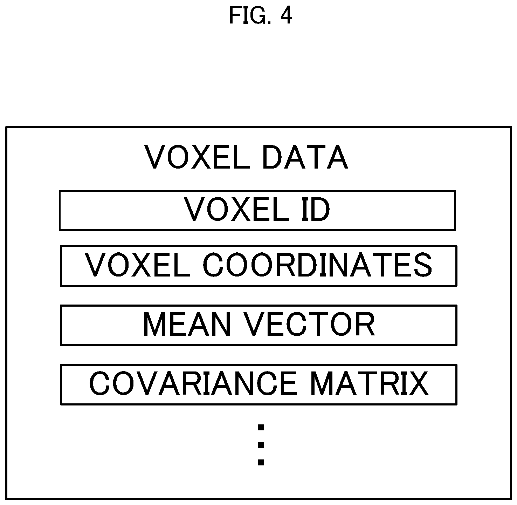

FIG. 4 shows an example of schematic data structure of the voxel data VD. The voxel data VD includes the parameter information for expressing the point clouds in the voxel by a normal distribution. In the present embodiment, the voxel data VD includes the voxel ID, the voxel coordinates, the mean vector, and the covariance matrix, as shown in FIG. 4.

The "voxel coordinates" indicate the absolute three-dimensional coordinates of the reference position such as the center position of each voxel. Incidentally, each voxel is a cube obtained by dividing the space into lattice shapes. Since the shape and size of the voxel are determined in advance, it is possible to identify the space of each voxel by the voxel coordinates. The voxel coordinates may be used as the voxel ID.

The "mean vector" and the "covariance matrix" show the mean vector and the covariance matrix corresponding to the parameters when the point cloud within the voxel is expressed by a normal distribution. Assuming that the coordinates of an arbitrary point "i" within an arbitrary voxel "n" is expressed as:

$$X_n(i) = [x_n(i), y_n(i), z_n(i)]^T$$

and the number of the point clouds in the voxel n is defined as "$N_n$", the mean vector "$\mu_n$" and the covariance matrix "$V_n$" in the voxel n are expressed by the following Formulas (1) and (2), respectively.
[Formula 1]

$$\boldsymbol{\mu}_n = \begin{bmatrix} \overline{x}_n \\ \overline{y}_n \\ \overline{z}_n \end{bmatrix} = \frac{1}{N_n} \sum_{i=1}^{N_n} \mathbf{X}_n(i) \quad (1)$$

[Formula 2]

$$\mathbf{V}_n = \frac{1}{N_n - 1} \sum_{i=1}^{N_n} \{\mathbf{X}_n(i) - \boldsymbol{\mu}_n\}\{\mathbf{X}_n(i) - \boldsymbol{\mu}_n\}^T \quad (2)$$

Next, the outline of the NDT scan matching using the voxel data VD will be described.

The scan matching by NDT assuming a ship estimates the estimation parameter P having the moving amount in the horizontal plane (here, it is assumed to be the xy co-ordinate) and the ship orientation as the elements:

$$P = [t_x,\ t_y,\ t_z,\ t_\varphi,\ t_\theta,\ t_\psi]^T$$

Here, "$t_x$" is the moving amount in the x-direction, "$t_y$" is the moving amount in the y-direction, "$t_z$" is the moving amount in the z-direction, "$t_\varphi$" is the roll angle, "te" is the pitch angle, and "$t_\psi$" is the yaw angle.

Further, assuming the coordinates of the point cloud data outputted by the Lider 3 are expressed as:

$$X_L(j) = [x_n(j),\ y_n(j),\ z_n(j)]^T$$

the average value "$L'_n$" of $X_L(j)$ is expressed by the following Formula (3).

[Formula 3]

$$\mathbf{L}'_n = \begin{bmatrix} L'_x \\ L'_y \\ L'_z \end{bmatrix} = \frac{1}{N} \sum_{j=1}^{N} \mathbf{X}_L(j)$$

Then, using the above-described estimation parameter P, the coordinate conversion of the average value L' is performed based on the known coordinate conversion processing. Thereafter, the converted coordinates are defined as "$L_n$".

The self-position estimation unit 15 searches the voxel data VD associated with the point cloud data converted into an absolute coordinate system that is the same coordinate system as the map DB 10 (referred to as the "world coordinate system"), and calculates the evaluation function value "$E_n$" of the voxel n (referred to as the "individual evaluation function value") using the mean vector $\mu_n$ and the covariance matrix $V_n$ included in the voxel data VD. In this case, the self-position estimation unit 15 calculates the individual evaluation function value $E_n$ of the voxel n based on the following Formula (4).

[Formula 4]

$$E_n = \exp\left\{ -\frac{1}{2}(\mathbf{L}_n - \boldsymbol{\mu}_n)^T \mathbf{V}_n^{-1}(\mathbf{L}_n - \boldsymbol{\mu}_n) \right\} \quad (4)$$

Then, the self-position estimation unit 15 calculates an overall evaluation function value (also referred to as "score value") "E(k)" targeting all the voxels to be matched, which is shown by the following Formula (5). The score value E serves as an indicator of the fitness of the matching.

[Formula 5]

$$E(k) = \sum_{n=1}^{M} E_n = E_1 + E_2 + \cdots + E_M \quad (5)$$

Thereafter, the self-position estimation unit 15 calculates the estimation parameter P which maximize the score value E(k) by an arbitrary root finding algorithm such as Newton method. Then, the self-position estimation unit 15 calculates the self-position based on the NDT scan matching (also referred to as the "NDT position") "$X_{NDT}(k)$" by applying the estimated parameter P to the position (also referred to as the "DR position") "$X_{DR}(k)$" calculated by the dead reckoning at the time k. Here, the DR position $X_{DR}(k)$ corresponds to the tentative self-position prior to the calculation of the estimated self-position $X^\wedge(k)$, and is also referred to as the predicted self-position "$\overline{X}(k)$". In this case, the NDT position $X_{NDT}(k)$ is expressed by the following Formula (6).

[Formula 6]

$$\mathbf{X}_{NDT}\left(k\right) = \overline{\mathbf{X}}(k) + \mathbf{P}$$

Then, the self-position estimation unit 15 regards the NDT position $X_{NDT}(k)$ as the final estimation result of the self-position at the present processing time k (also referred to as the "estimated self-position") "$X^\wedge(k)$".

(4) Obstacle/ship-wave Detection

Next, description will be given of the detection of obstacles and ship-waves by the obstacle/ship-wave detection unit 16. The obstacle/ship-wave detection unit 16 detects obstacles or ship-waves by using the water-surface height calculated in the processes up to one time before. When there are obstacles near the ship, it is necessary to navigate to avoid collision or contact with the obstacles. Obstacles are, for example, other ships, piles, bridge piers, buoys, nets, garbage, etc. Care should also be taken when navigating the ship in the presence of the ship-waves caused by other ships so that the effects of such waves do not cause significant shaking. Therefore, the obstacle/ship-wave detection unit 16 detects obstacles or ship-waves in the vicinity of the ship using the water-surface height.

(4-1) Estimation of water-surface position

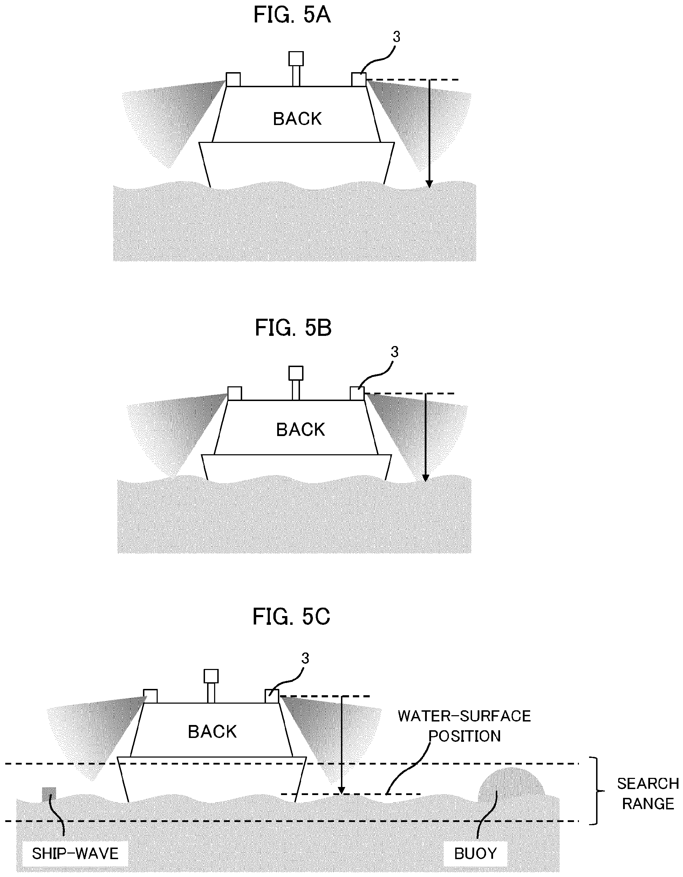

FIG. 5 is a diagram for explaining the water-surface height viewed from the Lidar 3. The ship's waterline position changes according to the number of passengers and the cargo volume. That is, the height to the water surface viewed from the Lidar 3 is changed. As shown in FIG. 5A, when the waterline position of the ship is low, the water-surface position viewed from the Lidar 3 is low. On the other hand, as shown in FIG. 5B, when the waterline position of the ship is high, the water-surface position viewed from the Lidar 3 becomes high. Therefore, as shown in FIG. 5C, by setting the search range having a predetermined width with respect to the water-surface position, it is possible to correctly detect obstacles and ship-waves.

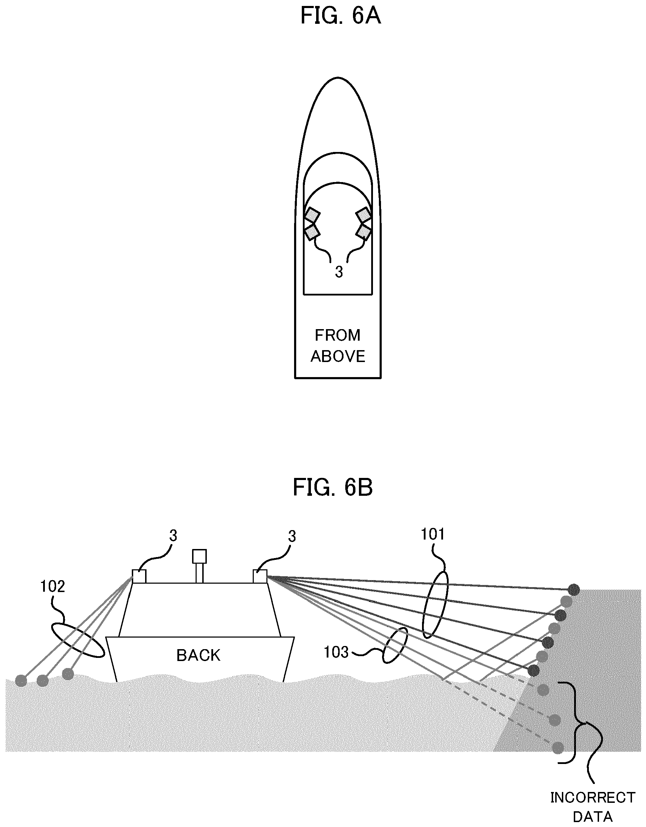

FIG. 6 is a diagram for explaining the water-surface reflection of the emitted light of the Lidar 3. Some of the emitted light of the Lidar 3 directed downward may be reflected by the water surface and return to the Lidar 3. Now, as shown in FIG. 6A, it is assumed that the Lidars 3 on the ship are emitting the laser light. FIG. 6B shows the light received by the Lidars 3 on the ship near the wharf. In FIG. 6B, the beams 101 are a portion of the scattered light of the light irradiated directly to the object and then returned to the Lidar 3 and received, without being reflected by the water surface. The beams 102 are the light emitted from the lidar 3, reflected by the water surface, and then returned directly back to the Lidar 3 and received. The beams 102 are one of the water-surface reflection light (hereinafter, also referred to as "direct water-surface reflection light"). The beams 103 are the light emitted from the Lidar 3, whose reflected light by the water surface hit the wharf or the like, a portion of the confused light caused by hitting the wharf is reflected by the water surface again, and then returned back to the Lidar 3 and received. The beam 103 are one of the water-surface reflection light (hereinafter, also referred to as "indirect water-surface reflection light"). The Lidar 3 cannot recognize that the light is reflected by the water surface. Therefore, when receiving the beams 102, the Lidar 3 recognizes as if there is an object at the water surface position. Further, when receiving the beams 103, the Lidar 3 recognizes as if there is an object below the water surface. Therefore, the Lidar 3 that has received the beams 103 will output incorrect point cloud data indicating the position inside the wharf as shown.

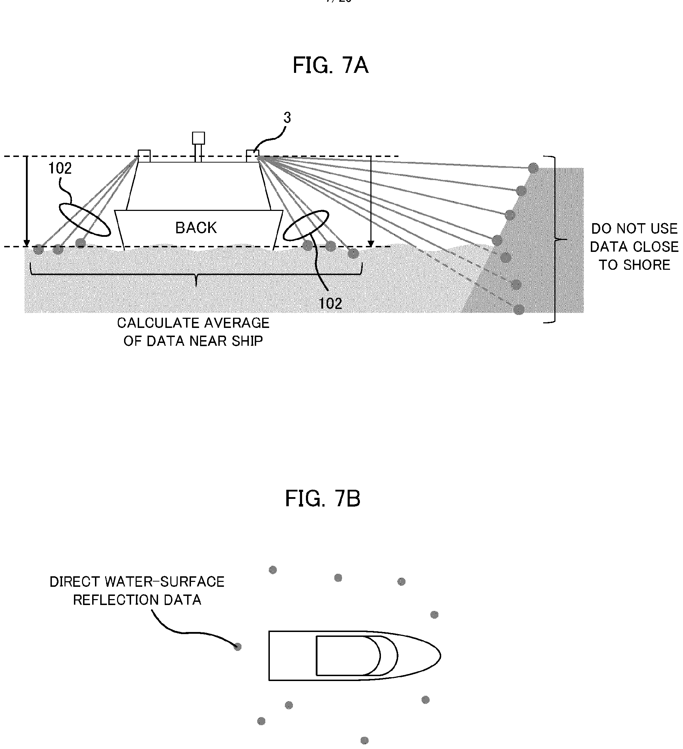

FIG. 7A and 7B are diagrams illustrating the point cloud data used for estimating the water-surface height (hereinafter, referred to as "water-surface position"). FIG. 7A is a view of the ship from the rear, and FIG. 7B is a view of the ship from above. In the vicinity of the ship, sometimes the beam from the Lidar 3 become substantially perpendicular to the water surface due to the fluctuation of the water surface, and the direct water-surface reflection light like the beams 102 described above is generated. On the other hand, when the ship is close to the shore, the beams from the Lidar 3 are reflected by the shore or the like and the indirect water-surface reflection light like the beams 103 described above is generated. Therefore, the obstacle/ship-wave detection unit 16 acquires a plurality of point cloud data of the direct water-surface reflection light in the vicinity of the ship, and averages their z-coordinate values to estimate the water-surface position. Since the ship is floating on the water, the amount of sinking in the water changes according to the number of passengers and the cargo volume, and the height from the Lidar 3 to the water surface changes. Therefore, by the above method, it is possible to always calculate the distance from the Lidar 3 to the water surface.

Specifically, the obstacle/ship-wave detection unit 16 extracts, from the point cloud data outputted by the Lidar 3, the point cloud data measured at the position far from the shore and close to the ship. Here, the position far from the shore refers to a position at least a predetermined distance away from the shore. As the position of the shore, the berthing locations (including shore and piers) that are stored in the map DB 10 can be used. Further, the shore may be a ground position or structure other than the berthing location. By using the point cloud data measured at the position far from the shore, the point cloud data of the indirect water-surface reflection light can be excluded.

The position close to the ship is a position within a predetermined range from the self-position of the ship. By using the point cloud data measured at the position close to the ship, it becomes possible to estimate the water-surface position with high accuracy using the point cloud data obtained by directly measuring the water-surface reflection light (hereinafter also referred to as "direct water-surface reflection data").

(4-2) Detection of obstacles

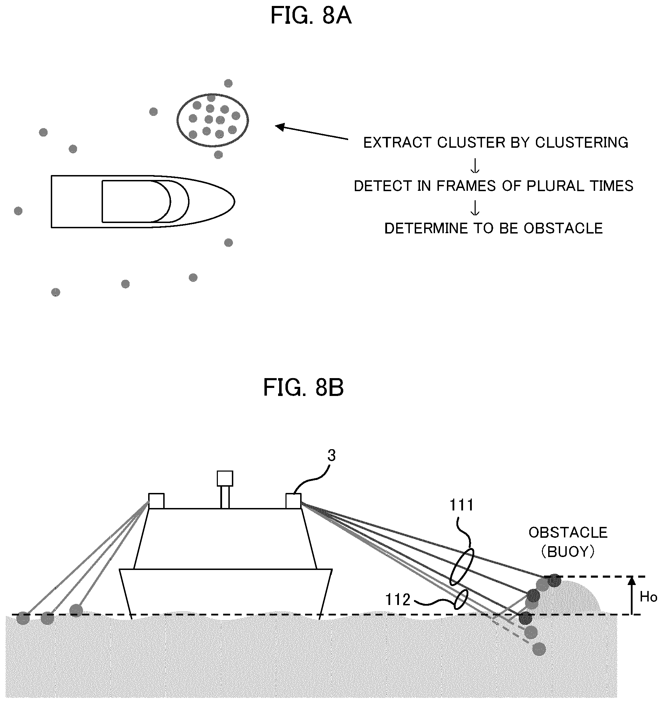

Next, a method for detecting obstacles will be described. FIG. 8 is a diagram illustrating a method of detecting an obstacle. After the water-surface position is estimated as described above, the obstacle/ship-wave detection unit 16 performs Euclidean clustering processing on the point cloud data at the height near the water-surface position. As shown in FIG. 8A, when a "mass" (hereinafter, also referred to as a "cluster") is detected by the Euclidean clustering processing, the obstacle/ship-wave detection unit 16 provisionally determines the cluster as an obstacle candidate. The obstacle/ship-wave detection unit 16 detects clusters in the same manner at a plurality of time frames, and determines the cluster as some kind of obstacle when the cluster of the same size is detected at each time.

In the case of detecting small obstacles on the water such as buoys, the water-surface reflection component can also be valuable information from the viewpoint of detection. In FIG. 8B, the beams 111 are emitted from the Lidar 3, reflected by the buoy and returned to the Lidar 3. On the other hand, the beams 112 are emitted from the Lidar 3, and reflected by the water surface to hit the buoy. A portion of the confused light caused by hitting the buoy is reflected by the water surface again, and is returned to the Lidar 3 and received. In the case of a small obstacle such as a buoy, the number of data directly reflected by the buoy as the beams 111 is small. By including the data of the component reflected by the water surface like the beam 112, the number of data used for analysis can be increased and utilized for clustering. This improves the performance of the clustering because the number of data subjected to the clustering processing can be increased.

When the obstacle/ship-wave detection unit 16 determines the detected cluster to be an obstacle, it subtracts the water-surface position from the z-coordinate of the highest point of the obstacle to calculate the height Ho of the obstacle coming out of the water surface, as shown in FIG. 8B.

(4-3) Method of detecting ship-wave

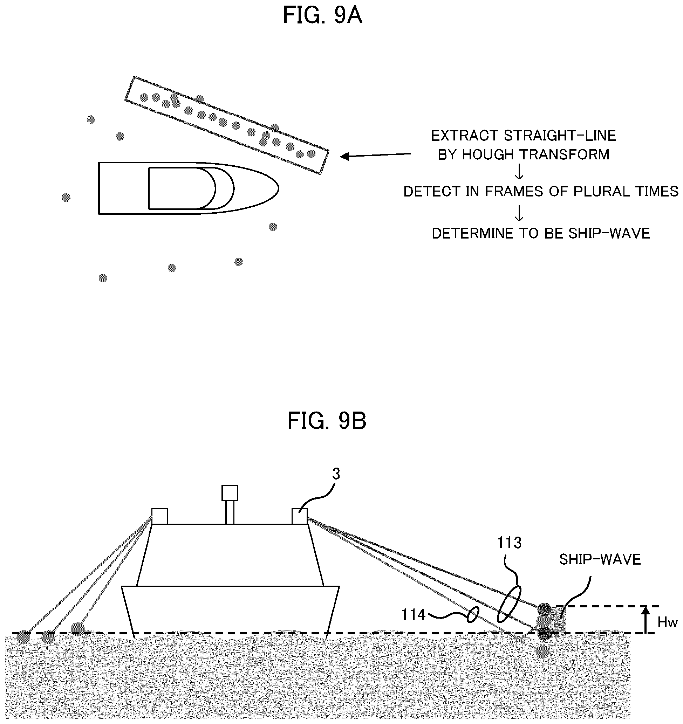

Next, a method of detecting the ship-wave will be described. FIG. 9 is a diagram for explaining a method of detecting the ship-wave. After the water-surface position is calculated as described above, the obstacle/ship-wave detection unit 16 performs Hough transform on the point cloud data of the height near the water-surface position, as a point cloud of the two-dimensional plane by ignoring the z-coordinate. As shown in FIG. 9A, a "straight-line" is detected by the Hough transform processing, and the obstacle/ship-wave detection unit 16 provisionally determines the straight-line to be a ship-wave candidate. The obstacle/ship-wave detection unit 16 similarly performs the straight-line detection in a frame of a plurality of times. When a straight-line having a similar coefficient is detected at each time, the obstacle/ship-wave detection unit 16 determines the straight-line to be the ship-wave.

Incidentally, when detecting the ship-wave, the water-surface reflection component can also be valuable information from the viewpoint of detection. In FIG. 9B, the beams 113 are emitted from the Lidar 3, reflected by the ship-wave and returned to the Lidar 3. On the other hand, the beam 114 is emitted from the Lidar 3, and reflected by the water surface to hit the ship-wave. A portion of the confused light caused by hitting the ship-wave is reflected by the water surface again, and returned to the Lidar 3 and received. In the case of a ship-wave, the number of data directly reflected by the ship-wave and return like the beams 113 is small. By including the data of the components reflected by the water surface like the beam 114, the number of data used for analysis is increased and utilized for the Hough transformation. Thus, since the number of data subjected to the Hough transformation processing increases, the performance of the Hough transformation is improved.

After determining the ship-wave using the two-dimensional data as described above, the obstacle/ship-wave detection unit 16 evaluates the z-coordinate of the points which are determined to be a part of the ship-wave once again. Specifically, the obstacle/ship-wave detection unit 16 calculates the average value of the z-coordinates using only the points whose z-coordinate value is higher than the water-surface height, and subtracts the water-surface position from the average value to calculate the height Hw of the ship-wave from the water surface.

(4-4) Example of the obstacle/ship-wave detection unit

Next, an example of the obstacle/ship-wave detection unit 16 will be described. In the following example, the obstacle/ship-wave detection unit 16 performs the processing in the order of the ship-wave detection → the obstacle detection → the water-surface position estimation, thereby to facilitate the subsequent process. Specifically, the obstacle/ship-wave detection unit 16 determines the heights of the ship-wave and the obstacle by using the water-surface position estimated by the water-surface position estimation block 132, and uses them for setting the search range for the point cloud data of the next time.

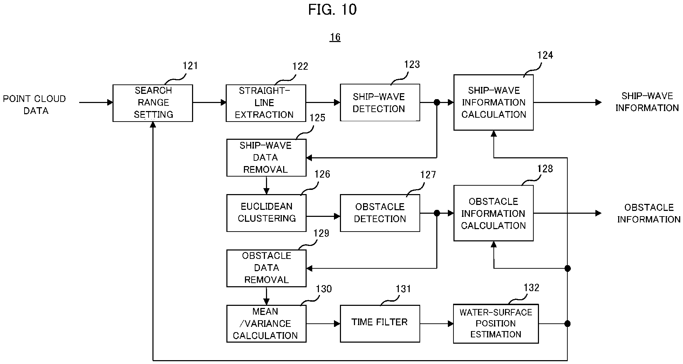

FIG. 10 is a block diagram showing a functional configuration of the obstacle/ship-wave detection unit 16. The obstacle/ship-wave detection unit 16 receives the point cloud data measured by the Lidar 3, and outputs the ship-wave information and the obstacle information. The obstacle/ship-wave detection unit 16 includes a search range setting block 121, a straight-line extraction block 122, a ship-wave detection block 123, a ship-wave information calculation block 124, a ship-wave data removal block 125, a Euclidean clustering block 126, an obstacle detection block 127, an obstacle information calculation block 128, an obstacle data removal block 129, an mean/variance calculation block 130, a time filter block 131, and a water-surface position estimation block 132.

The search range setting block 121 extracts the point cloud data of the direct water-surface reflection light from the inputted point cloud data, and sets the search range of the obstacle and the ship-wave in the height direction. The obstacle/ship-wave detection unit 16 detects obstacles and ship-waves by extracting and analyzing the point cloud data belonging to the search range set around the water-surface position as shown in FIG. 5C. However, if the ship's swaying is large or the wave is large, there is a possibility that the obstacles and ship-waves floating on the water surface will deviate from the search range and cannot be detected. On the other hand, if the search range is increased to avoid it, irrelevant data will enter when the wave is small, and the detection accuracy will decrease.

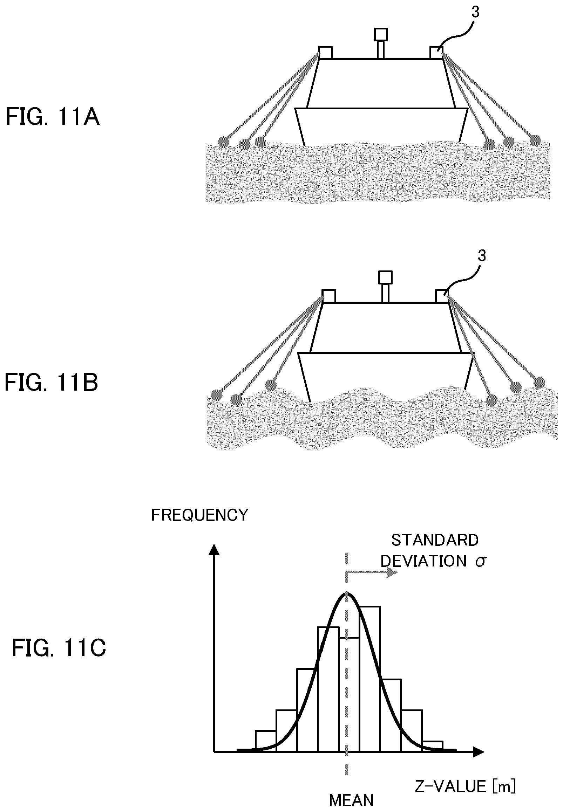

Therefore, the search range setting block 121 calculates the standard deviation of the z-coordinate values of the direct water-surface reflection data obtained in the vicinity of the ship as described above, and sets the search range using the value of the standard deviation. Specifically, the search range setting block 121 estimates the height of the wave (wave height) using the standard deviation of the z-coordinate values of the direct water-surface reflection data, and sets the search range in accordance with the wave height. When the standard deviation of the z-coordinate values of the direct water-surface reflection data is small, it is presumed that the wave height is small as shown in FIG. 11A. In this case, the search range setting block 121 narrows the search range. For example, the search range setting block 121 sets the search range in the vicinity of the average value of the z-coordinate value of the direct water-surface reflection data. Thus, since the mixture of the noise can be reduced, the detection accuracy of the obstacle and ship-wave is improved.

On the other hand, when the standard deviation of the z-coordinate values of the direct water-surface reflection data is large, it is presumed that the wave height is large as shown in FIG. 11B. Therefore, the search range setting block 121 expands the search range. That is, the search range setting block 121 sets a search range which is wider than the case where the wave height is smaller and which is centered on the average value of the z-coordinate values of the direct water-surface reflection data.

As an example, as shown in FIG. 11C, the search range setting block 121 may set the search range to be a range of $\pm 3\sigma$ around the average value of the z-coordinate value of the direct water-surface reflection data by using the standard deviation $\sigma$ of the z-coordinate values of the direct water-surface reflection data. Thus, even when the wave is high, the search range can be broad, and the detection failure of obstacles and ship-waves can be prevented. The search range setting block 121 outputs the set search range to the straight-line extraction block 122.

The straight-line extraction block 122 extracts a straight-line from the direct water-surface reflection data measured within the search range around the ship (hereinafter, also referred to as "search data") using Hough transform. The straight-line extraction block 122 outputs the extracted straight-line to the ship-wave detection block 123. Since a discretized two-dimensional array is used to detect straight-lines by the Hough transform, the resulting straight-lines are approximate. Therefore, the straight-line extraction block 122 and the ship-wave detection block 123 calculate more accurate straight-lines by the following procedure.

(Process 1) Calculate an approximate straight-line using the Hough transform.
(Process 2) Extract the data whose distance to the approximate straight-line is within a predetermined threshold (linear distance threshold).
(Process 3) A principal component analysis is performed using the multiple extracted data, and the straight-line is calculated again as the straight-line of the ship-wave.

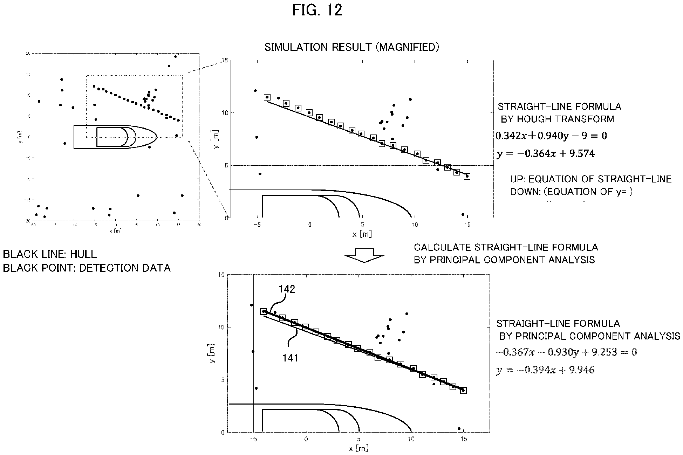

FIG. 12 shows the result of a simulation for detecting a straight-line in the above procedure. As shown, since the straight-line 141 obtained by the Hough transform is an approximate straight-line, it can be seen that there is a slight deviation from the data. The accurate straight-line of the ship-wave can be obtained by extracting data within the linear distance threshold from the straight-line 141 (marked by "□" in FIG. 12) and calculating a straight-line again by the principal component analysis using the extracted data.

The ship-wave detection block 123 determines the straight-line calculated again as the ship-wave, and outputs the ship-wave data indicating the ship-wave to the ship-wave information calculation block 124 and the ship-wave data removal block 125. The ship-wave information calculation block 124 calculates the position, the distance, the angle and the height of the ship-wave based on the formula of the straight-line indicating the ship-wave and the self-position of the ship, and outputs them as the ship-wave information.

The ship-wave data removal block 125 removes the ship-wave data from the search data measured within the search range around the ship, and outputs it to the Euclidean clustering block 126. The Euclidean clustering block 126 performs the Euclidean clustering processing on the inputted search data to detect a cluster of the search data, and outputs the detected cluster to the obstacle detection block 127.

In the Euclidean clustering, first, for all points of interest, the distance to all other points (point-to-point distance) is calculated. Then, the points whose obtained distance to other point is shorter than a predetermined value (hereinafter, referred to as "grouping threshold") are put into the same group. Next, among the groups, a group including the points equal to or more than a predetermined number (hereinafter, referred to as "point-number threshold") is regarded as a cluster. Since a group including a small number of points may be a noise with high possibility, and is not regarded as a cluster.

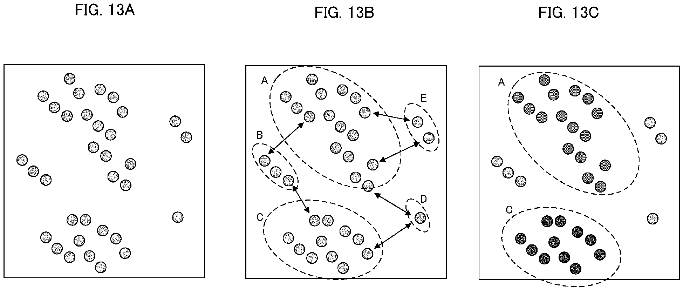

FIGS. 13A to 13C show an example of Euclidean clustering. FIG. 13A shows multiple points subjected to the Euclidean clustering. The grouping was performed by calculating the point-to-point distance of each point shown in FIG. 13A and comparing it with the grouping threshold. Since the distance indicated by each arrow in FIG. 13B is greater than the grouping threshold, five groups A to E shown by the dashed lines in FIG. 13B were obtained. Next, the number of points belonging to each group is compared with the point-number threshold (here referred to as "6.") as shown in FIG. 13C, and only the groups A and C including the points of the number larger than the point-number threshold was finally determined as the clusters.

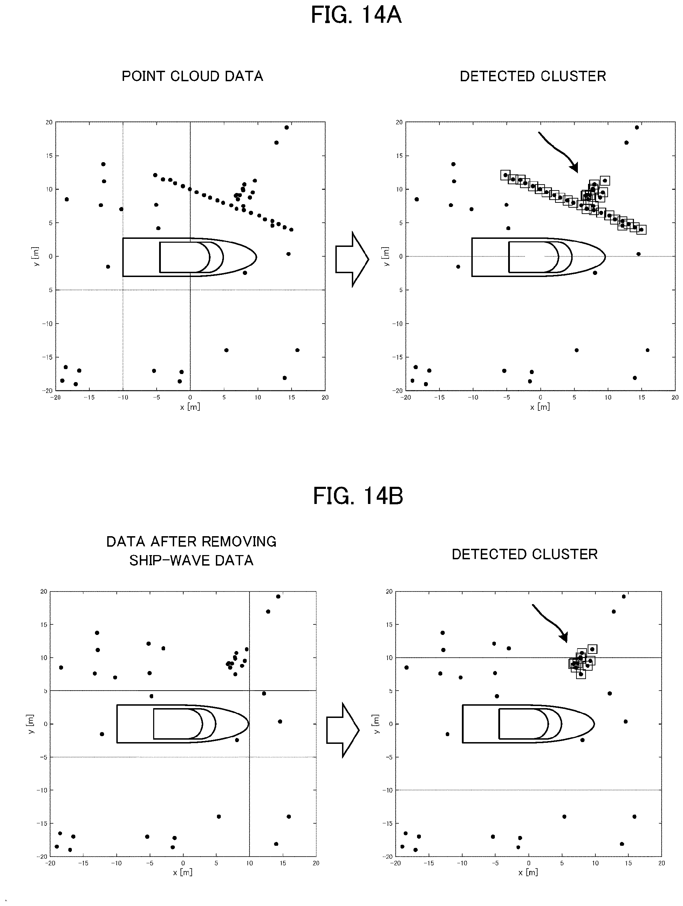

FIGS. 14A and 14B show the simulation results of the Euclidean clustering. FIG. 14A shows the simulation result for the case where the ship-wave data remains during the Euclidean clustering. When the group discrimination is carried out by the grouping threshold in the Euclidean clustering, if the ship-wave data remains, there is a possibility that the obstacle and the ship-wave may be judged as the same cluster. In the example of FIG. 14A, the data of the obstacle and the ship-wave wave belong to the same group because the ship-wave and the obstacle are close to each other. Since the number of points of the group is higher than the point-number threshold, they are detected as the same cluster.

FIG. 14B shows the simulation result when the Euclidean clustering is performed after removing the ship-wave data. In order to distinguish the obstacle from the ship-wave, the ship-wave detection is carried out first, and the Euclidean clustering was carried out after removing the data determined to be the ship-wave data. In this case, the obstacles are correctly detected as the clusters, without being affected by the ship-wave data.

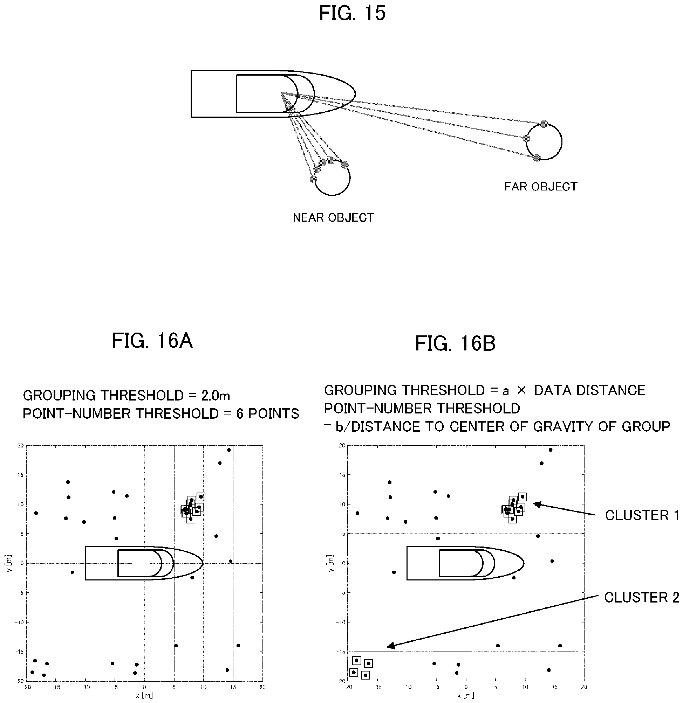

Generally, the Lidar's light beam is outputted radially. Therefore, the farther the data is, the wider the distance between the positions will be. Therefore, as shown in FIG. 15, the farther the data is, the longer the distance to the adjacent data. Further, even for the object of the same size, the number of the detected points is large if it exists near, and the number of the detected points is small if it exists far. Therefore, in the Euclidean clustering processing, by setting the grouping threshold and the point-number threshold in accordance with the distance value of the data, it is possible to perform the clustering determination with as similar condition as possible, even for a far object from the Lidar.

FIGS. 16A and 16B show the results of the simulation performed by increasing the grouping threshold as the distance of the data is greater, and decreasing the point-number threshold as the distance to the center of gravity of the group is greater.

FIG. 16A shows the simulation result in the following case.

Grouping threshold= 2.0m
Point-number threshold = 6 points

FIG. 16B shows the simulation result in the following case.

$$\text{Grouping threshold} = a \times (\text{Data distance}),$$

Point-number threshold = b/ (Distance to the center of gravity of the group)

Although a=0.2, b=80 in this simulation, they are actually set to suitable values by the characteristics of the Lidar 3.

As can be seen when comparing FIG. 16A and FIG. 16B, the cluster 2 located far from the ship is detected in addition to the cluster 1 located near the ship in FIG. 16B. As to the cluster 2, although the distance between the data is a value close to 3m, the grouping threshold calculated using the distance from the ship to the data is about 4.5m and the distance is closer than the threshold value. Therefore, the data in the cluster 2 are put into the same group. Also, although the number of data points is 4 points, the point-number threshold calculated using the distance to the center of gravity of the group is about 3.2 and the number of the data points is larger than the threshold. Therefore, those data are determined to be a cluster. When the above formula is used, as to the cluster 1, the grouping threshold calculated using the distance from the ship to the data is a value close to 2.5m and the point-number threshold is about 7.1. Therefore, it can be seen that the cluster 1 does not change significantly compared to the fixed value in FIG. 16A. By such adaptive threshold setting, detection failure and erroneous detection of the cluster can be prevented as much as possible, thereby improving the performance of the obstacle detection.

The obstacle detection block 127 outputs the point cloud data (hereinafter, referred to as "obstacle data") indicating the obstacle detected by the Euclidean clustering to the obstacle information calculation block 128 and the obstacle data removal block 129. The obstacle information calculation block 128 calculates the position, the distance, the angle, the size, and the height of the obstacle based on the self-position of the ship, and outputs them as the obstacle information.

The obstacle data removal block 129 removes the obstacle data from the search data measured within the search range around the ship and outputs the search data to the mean/variance calculation block 130. This is because, when estimating the water-surface position from the direct water-surface reflection data around the ship, the water-surface position cannot be correctly estimated if there are ship-waves or obstacles.

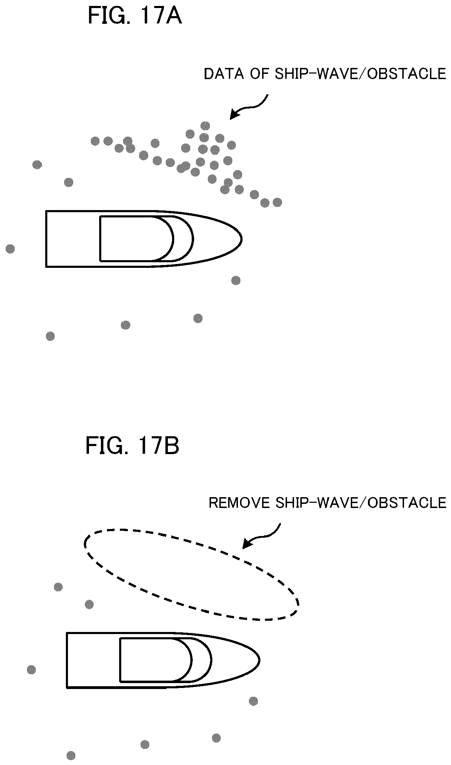

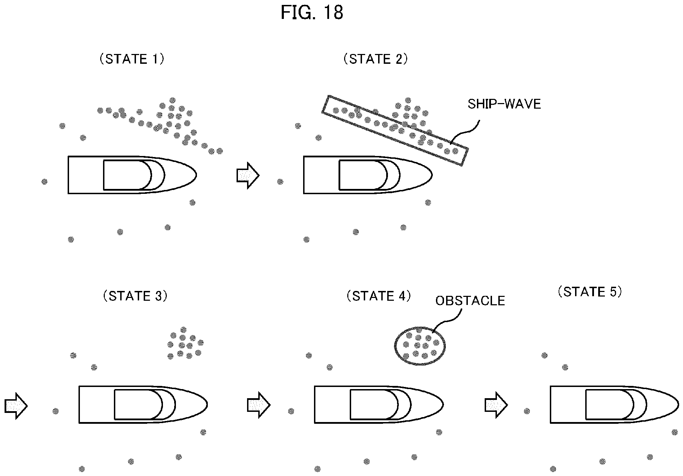

FIG. 17A shows the direct water-surface reflection data obtained when there are ship-waves or obstacles around the ship. In this case, the data at the position higher than the water surface, or the indirect water-surface reflection light caused by the obstacle or the ship-wave (e.g., the beams 112 in FIG. 8B, the beam 114 in FIG. 9B, etc.) becomes an error factor in the water-surface position estimation. Therefore, the water-surface position estimation is performed by the ship-wave data removal block 125 and the obstacle data removal block 129 using the search data after removing the ship-waves or the obstacles as shown in FIG. 17B. Specifically, as shown in FIG. 18, from the state 1 in which there is a ship-wave and an obstacle near the ship, the ship-wave is detected and removed as shown in the state 2 to create the state 3. Next, the obstacle is detected and removed as shown in the state 4 to obtain the direct water-surface reflection data that does not include a ship-wave or an obstacle, as shown in the state 5.

Specifically, the mean/variance calculation block 130 calculates the average value and the variance value of the z-coordinate values of the direct water-surface reflection data obtained around the ship, and outputs the values to the time filter block 131. The time filter block 131 performs an averaging process or a filtering process of the average value of the z-coordinate values of the inputted direct water-surface reflection data with the past water-surface positions. The water-surface position estimation block 132 estimates the water-surface position using the average value of the z-coordinate values after the averaging process or the filtering process and the variance value of the z-coordinate values of the search data.

When estimating the water-surface position, if the variance value of the direct water-surface reflection data around the ship is large, it can be expected that the wave is high due to the passage of another ship, or there is a floating object that was not detected as the obstacle. Therefore, when the variance value is smaller than the predetermined value, the water-surface position estimation block 132 estimates and updates the water-surface position using the average value of the direct water-surface reflection data. On the other hand, when the variance value is equal to or larger than the predetermined value, the water-surface position estimation block 132 does not update the water-surface position and maintains the previous value. Here, the "predetermined value" may be a fixed value, a value set based on the average value of the past variance value, e.g., twice the average value of the variance value. Then, the water-surface position estimation block 132 outputs the estimated water-surface position to the search range setting block 121, the ship-wave information calculation block 124 and the obstacle information calculation block 128. Thus, the ship-waves and obstacles are detected, while updating the water-surface position based on the newly obtained direct water-surface reflection data.

(4-5) Obstacle/Ship-wave detection processing

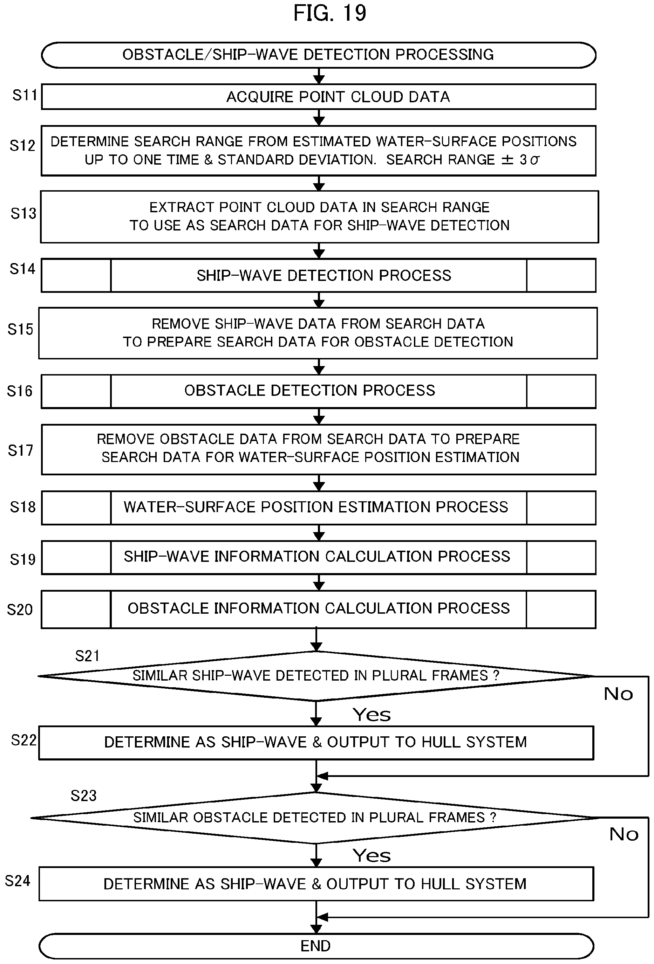

Next, the obstacle/ship-wave detection processing performed by the obstacle/ship-wave detection unit 16 will be described. FIG. 19 is a flowchart of the obstacle/ship-wave detection processing. This processing is realized by the controller shown in FIG. 2, which executes a program prepared in advance and operates as the elements shown in FIG. 10.

First, the obstacle/ship-wave detection unit 16 acquires the point cloud data measured by the Lidar 3 (step S11). Next, the search range setting block 121 determines the search range from the estimated water-surface positions up to one time before and the standard deviation σ of the z-coordinate values of the direct water-surface reflection data obtained around the ship (step S12). For example, when the standard deviation is σ, the search range setting block 121 determines as follows.

$$\text{Search range} = \text{Estimated water-surface position} \pm 3\sigma$$

Then, the search range setting block 121 extracts the point cloud data within the determined search range, and sets them to the search data for the ship-wave detection (step S13).

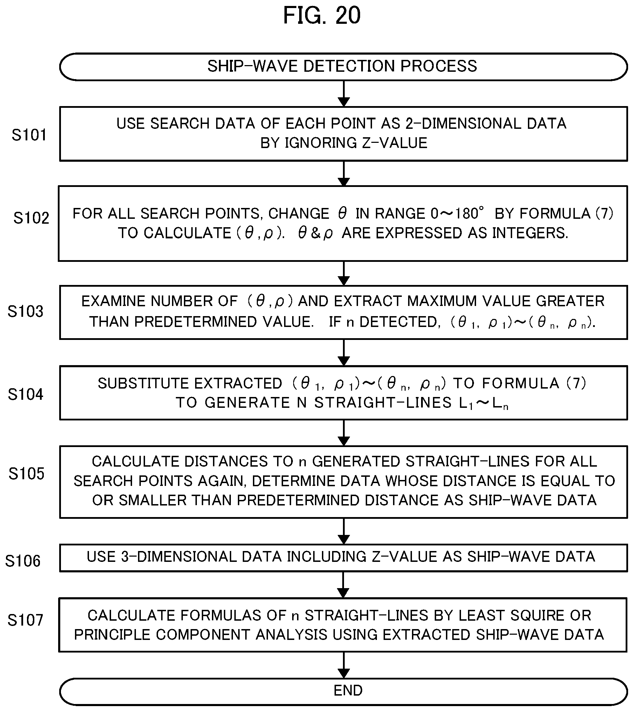

Next, the obstacle/ship-wave detection unit 16 executes the ship-wave detection process (step S14). FIG. 20 is a flowchart of the ship-wave detection process. First, the straight-line extraction block 122 regards each point of the search data obtained from the search range as the two-dimensional data of x- and y-coordinates, by ignoring the z-value (step S101). Next, the straight-line extraction block 122 calculates (θ, ρ) by changing θ in the range of 0 to 180 degrees for all the search points using the following Formula (7) (step S102). Here, "θ" and "ρ" are expressed as integers to create a discretized two-dimensional array having (θ, ρ) as the elements.

[Formula 7]

$$x \cos \theta + y \sin \theta - \rho = 0 \qquad (7)$$

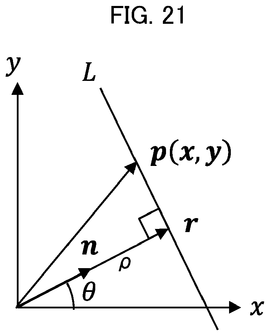

Here, Formula (7) is the formula of the straight-line L represented by using θ and ρ, when a perpendicular line is drawn to the straight-line L in FIG. 21, and the foot of the perpendicular line is expressed as "r", the distance of the perpendicular line is expressed as "ρ", and the angle between the perpendicular line and the x-axis is θ.

Next, the straight-line extraction block 122 examines the number of (θ, ρ), and extracts a maximum value greater than the predetermined value (step S103). If we extract n (θ, ρ), we get $(\theta_1, \rho_1) \sim (\theta_n, \rho_n)$. Then, the straight-line extraction block 122 substitutes the extracted $(\theta_1, \rho_1) \sim (\theta_n, \rho_n)$ into the Expression (7) and generates n straight-lines $L_1 \sim L_n$ (step S104).

Next, the ship-wave detection block 123 calculates the distances to the generated n-lines $L_1 \sim L_n$ for all the search points again, and determines the data whose distance is equal to or smaller than the predetermined distance as the ship-wave data (step S105). Next, for the above ship-wave data, the ship-wave detection block 123 regards the three-dimensional data including the z-value as the ship-wave data (step S106). Next, the ship-wave detection block 123 calculates the formulas of the n straight-lines again, using the extracted ship-wave data, by using the least squares method or the principal component analysis (step S107). Then, the process returns to the main routine of FIG. 19.

Next, the ship-wave data removal block 125 removes the ship-wave data from the search data to prepare the search data for obstacle detection (step S15).

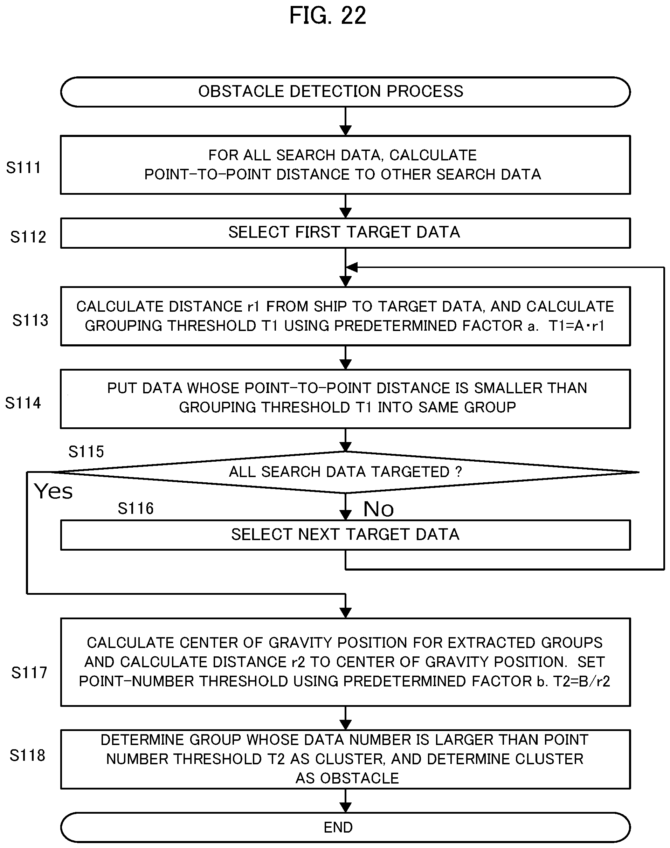

Next, the obstacle/ship-wave detection unit 16 executes an obstacle detection process (step S16). FIG. 22 is a flowchart of the obstacle detection process. First, the Euclidean clustering block 126 calculates, for all the search data, the point-to-point distances to all the other search data (step S111). If the number of the search data is n, then n(n-1) point-to-point distances are calculated. Next, the Euclidean clustering block 126 selects the first target data (step S112), calculates the distance r1 from the ship to the target data, and calculates the grouping threshold T1 using a predetermined factor a (step S113). For example, T1=a·r1. In other words, the grouping threshold T1 differs for each target.

Next, the Euclidean clustering block 126 puts the data whose point-to-point distance to the target data is smaller than the grouping threshold T1 into the same group (step S1 14). Next, the Euclidean clustering block 126 determines whether or not all of the search data has been targeted (step S1 15). If all the search data has not been targeted (step S115: No), the Euclidean clustering block 126 selects the next target data (step S116) and returns to step S 113.

On the other hand, when all the search data are targeted (step S115: Yes), the Euclidean clustering block 126 obtains the center of gravity positions respectively for the extracted groups and calculates the distance r2 to the center of gravity positions. Then, the Euclidean clustering block 126 sets the point-number thresholds T2 using a predetermined factor b (step S1 17). For example, T2 = b/r2. In other words, the point-number threshold T2 differs for each group.

Next, the Euclidean clustering block 126 determines, for each group, the group including the data of the number equal to or greater than the point-number threshold T2 as a cluster, and the obstacle detection block 127 determines the cluster as an obstacle (step S118). Then, the process returns to the main routine of FIG. 19.

Next, the obstacle data removal block 129 removes the data determined to be the obstacle from the search data to prepare the data for the water-surface position estimation (Step S17).

Next, the obstacle/ship-wave detection unit 16 executes the water-surface position estimation process (step

EP 4 310 550 A1

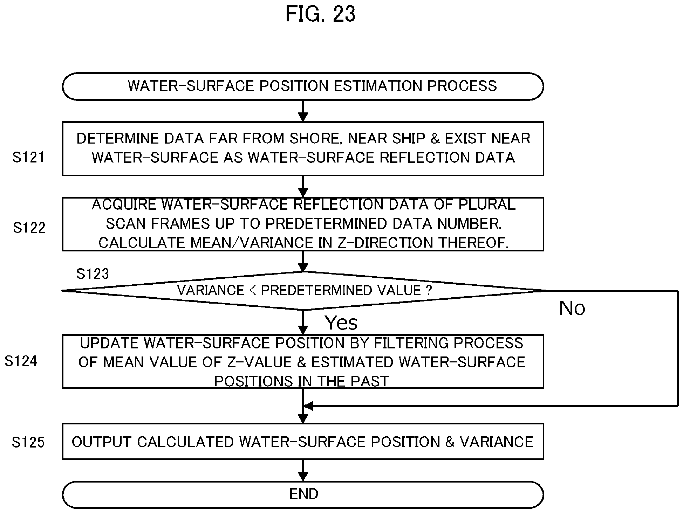

S18). FIG. 23 is a flowchart of the water-surface position estimation process. First, the mean/variance calculation block 130 determines the data that is far from the shore, close to the ship position, and exists near the water-surface position as the water-surface reflection data (step S121). Next, the mean/variance calculation block 130 acquires the water-surface reflection data of the plural scan frames. When the mean/variance calculation block acquires the predetermined number of data, it calculates the mean and variance values in the z-direction thereof (step S122).

Next, the mean/variance calculation block 130 determines whether or not the variance value is smaller than a predetermined value (step S123). If the variance value is not smaller than the predetermined value (step S123: No), the process proceeds to step S125. On the other hand, if the variance value is smaller than a predetermined value (step S123: Yes), the time filter block 131 performs the filtering process of the average value of the acquired z values and the estimated water-surface positions in the past, thereby to update the water-surface position (step S124). Next, the water-surface position estimation block 132 outputs the calculated water-surface position and the variance value (step S125). Then, the process returns to the main routine of FIG. 19.

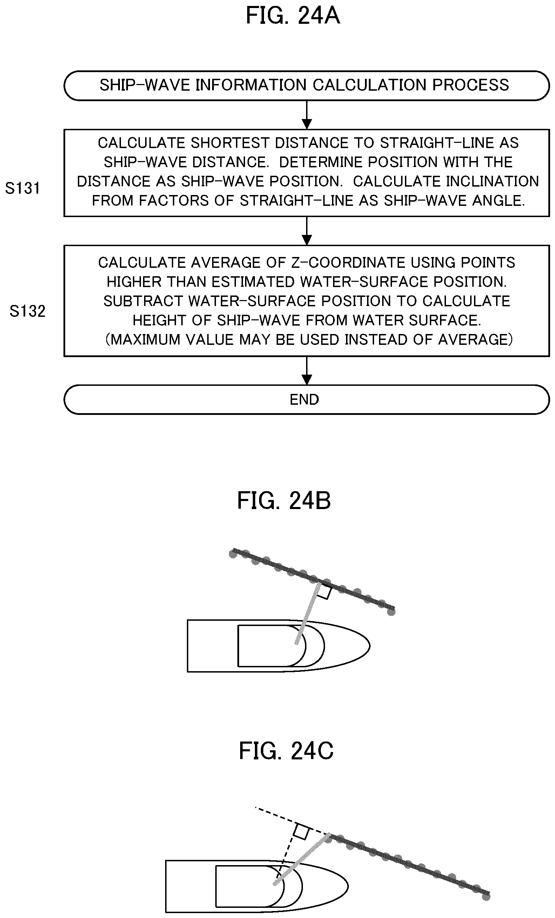

Next, the obstacle/ship-wave detection unit 16 executes the ship-wave information calculation process (step S19). FIG. 24A is a flowchart of a ship-wave information calculation process. First, based on the self-position of the ship, the ship-wave information calculation block 124 calculates the shortest distance to the straight-line detected by the ship-wave detection block 123, and uses the distance as the distance to the ship-wave. In addition, the ship-wave information calculation block 124 calculates the position with the distance, and uses the position as the position of the ship-wave. Further, the ship-wave information calculation block 124 calculates the inclination from the coefficient of the straight-line, and uses the inclination as the angle of the ship-wave (step S131).

Incidentally, as shown in FIG. 24B, the shortest distance from the ship's self-position to the straight-line is the distance to the foot of the perpendicular line drawn to the straight-line. However, since the straight-line detected as the ship-wave is a line segment, there is a case where the end point of the data detected as the ship-wave is the shortest distance as shown in FIG. 24C. Therefore, the ship-wave information calculation block 124 checks whether or not the line segment includes the coordinates of the foot of the perpendicular line, and uses the distance to the end point as the shortest distance if the line segment does not include the coordinates of the foot of the perpendicular line.

Next, the ship-wave information calculation block 124 calculates the average of the z-coordinate values using only the points whose z-value are higher than the estimated water-surface position, and calculates the height of the ship-wave from the water surface using the estimated water-surface position (step S132). Instead of the average value of the z-coordinate values, the maximum value of the z-coordinate values may be used as the height of the ship-wave. Then, the process returns to the main routine of FIG. 19.

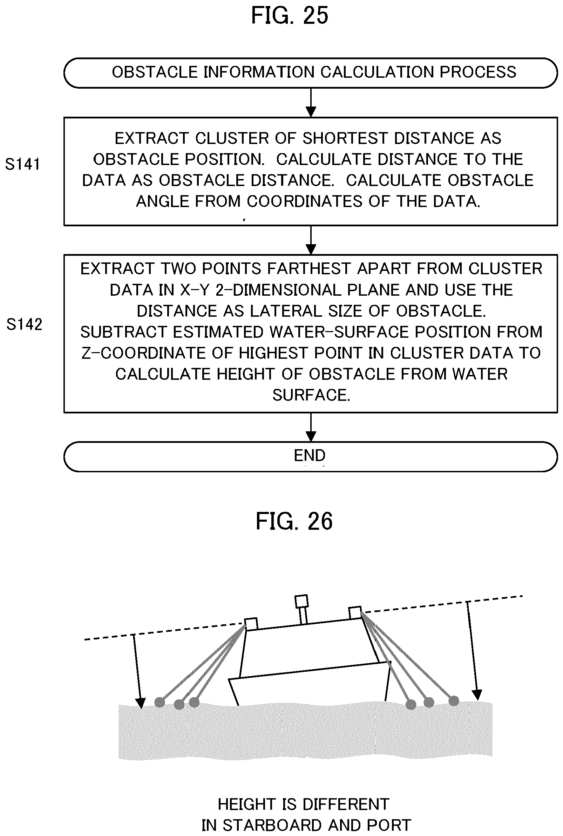

Next, the obstacle/ship-wave detection unit 16 performs an obstacle information calculation process (step S20). FIG. 25 is a flowchart illustrating an obstacle information calculation process. First, the obstacle information calculation block 128 extracts the one of the clusters having the shortest distance, among the clusters detected as the obstacles, by using the self-position of the ship as a reference, and determines the position of the obstacle. In addition, the obstacle information calculation block 128 calculates the distance to the data as the distance to the obstacle. In addition, the obstacle information calculation block 128 calculates the angle of the obstacle from the coordinates of the data (step S141).

Next, the obstacle information calculation block 128 extracts two points in the cluster data that are farthest apart in the x-y two-dimensional plane, and determines the distance as the lateral size of the obstacle. In addition, the obstacle information calculation block 128 subtracts the water-surface position from the z-coordinate of the highest point among the cluster data to calculate the height of the obstacle from the water surface (step S142). Then, the process returns to the main routine of FIG. 19.

Next, the obstacle/ship-wave detection unit 16 determines whether or not similar ship-waves are detected in a plurality of frames (step S21). When the ship itself or the ship-wave moves, it does not exactly coincide. However, if there is only slight difference in the values calculated in step S19, the obstacle/ship-wave detection unit 16 determines them to be similar ship-waves. If similar ship-waves are not detected (step S21: No), the process proceeds to step S23. On the other hand, if similar ship-waves are detected (step S21: Yes), the ship-wave information calculate block 124 determines the data to be the ship-wave, and outputs the ship-wave information to the hull system (step S22).

Next, the obstacle/ship-wave detection unit 16 determines whether or not similar obstacles are detected in a plurality of frames (step S23). When the ship itself or the obstacle moves, it does not exactly coincide. However, if there is only slight difference in the values calculated in step S20, the obstacle/ship-wave detection unit 16 determines them to be similar obstacles. If the similar obstacles are not detected (step S23: No), the process ends. On the other hand, if similar obstacles are detected (step S23: Yes), the obstacle information calculation block 128 determines the data to be the obstacle and outputs the obstacle information to the hull system (step S24). Then, the process ends.

15

(4-6) Modifications

(Modification 1)

Although the above water-surface position estimation utilizes the variance value of the water-surface reflection data, if the hull is statically inclined in the roll direction due to the deviation of the load or the like as illustrated in FIG. 26, the variance value of the water-surface reflection data increases. In estimating the water-surface position in such a situation, the water-surface position estimation block 132 may process the water-surface reflection data on the starboard side and the water-surface reflection data on the port side separately, and determine the water-surface position on the starboard side and the water-surface position on the port side separately. Alternatively, the water-surface position estimation block 132 can estimate the water-surface position without separating the starboard and port sides by applying a coordinate transformation for rotating the roll angle to the water-surface reflection data so that the difference between the average value of the starboard side of the water-surface reflection data and the average value of the port side of the water-surface reflection data becomes small.

(Modification 2)

In the above example, the straight-line extraction block 122 extracts a straight-line of the ship-wave by the following Processes 1 to 3.

(Process 1) Calculate an approximate straight-line using the Hough transform.
(Process 2) Extract the data whose distance to the approximate straight-line is within a predetermined threshold (linear distance threshold).
(Process 3) A principal component analysis is performed using the multiple extracted data, and the straight-line is calculated again as the straight-line of the ship-wave.

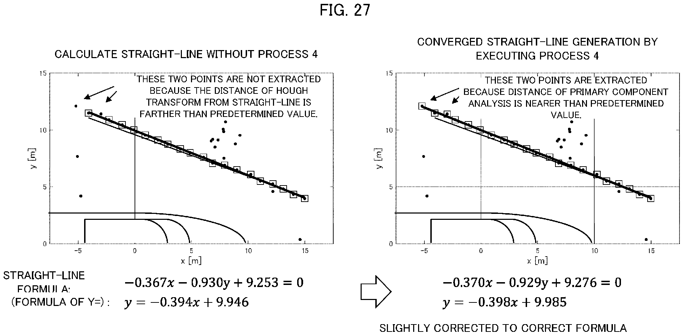

In contrast, the following Process 4 may be added to repeatedly execute Processes 2 and 3 according to the determination result of of Process 4.
(Process 4) If the extracted data changes and the formula of the straight-line changes, the process returns to Process 2. When the formula of the straight-line does not change, it is determined to be the straight-line of the ship-wave.
The graph on the left side of FIG. 27 shows an example in which the straight-line is obtained without carrying out the above-described Process 4. The graph on the right side shows an example in which the straight-line generation is converged by carrying out up to Process 4. By adding Process 4, the extraction failure of the ship-wave data can be avoided, and consequently the accuracy of the straight-line can be improved.
While the present invention has been described with reference to Examples, the present invention is not limited to the above Examples. Various modifications that can be understood by a person skilled in the art within the scope of the present invention can be made to the configuration and details of the present invention. That is, the present invention includes, of course, various modifications and modifications that may be made by a person skilled in the art according to the entire disclosure and technical concepts including the scope of claims. In addition, each disclosure of the above-mentioned patent documents cited shall be incorporated by reference in this document.

DESCRIPTION OF SYMBOLS

1 Information processing device
2 Sensor group
3 Lidar
4 Speed sensor
5 GPS receiver
6 IMU
10 Map DB
13 Controller
15 Self-position estimation unit
16 Obstacle/ship-wave detection unit
121 Search range setting block
122 Straight-line extraction block
123 Ship-wave detection block

124 Ship-wave information calculation block
125 Ship-wave data removal block
126 Euclidean clustering block
127 Obstacle detection block
128 Obstacle information calculation block
129 Obstacle data removal block
130 Mean/variance calculation block
131 Time filter block
132 Water-surface position estimation block

**Claims**

1. An information processing device comprising:

   a point cloud data acquisition means configured to acquire point cloud data generated by a measurement device provided on a ship;
   a water-surface reflection data extraction means configured to extract data obtained by measuring a position which is a predetermined distance away from a shore and which is within a predetermined distance from a measurement position of the measurement device, as a water-surface reflection data measured by reflection at a water surface; and
   a water-surface height calculation means configured to calculate a water-surface height based on the water-surface reflection data.

2. The information processing device according to claim 1, wherein the water-surface height calculation means calculates an average of the values of the water-surface reflection data in a height direction as the water-surface height.

3. The information processing device according to claim 1, wherein the water-surface height calculation means calculates an average and a variance of the values in the height direction of the water-surface reflection data, and calculates the average as the water-surface height when the variance is smaller than a predetermined value.

4. The information processing device according to any one of claims 1 to 3, further comprising a detection means configured to set a search range based on the measurement position and the water-surface height, and detect an obstacle and a ship-wave based on the point cloud data belonging to the search range.

5. The information processing device according to claim 4, wherein the detection means determines whether or not the point cloud data belonging to the search range forms a linear shape, and detects a linear point cloud data as a ship-wave when the linear point cloud data exists for a predetermined time.

6. The information processing device according to claim 4, wherein the detection means determines whether or not the point cloud data belonging to the search range forms a cluster, and detects a point cloud data forming the cluster as an obstacle when the point cloud data forming the cluster exists for a predetermined time.

7. The information processing device according to any one of claims 4 to 6, wherein the detection means changes a height range of the search range based on a variance of a value in a height direction of the water-surface reflection data.

8. A control method executed by a computer, comprising:

   acquiring point cloud data generated by a measurement device provided on a ship;
   extracting data obtained by measuring a position which is a predetermined distance away from a shore and which is within a predetermined distance from a measurement position of the measurement device, as a water-surface reflection data measured by reflection at a water surface; and
   calculating a water-surface height based on the water-surface reflection data.

9. A program causing a computer to execute processing of:

   acquiring point cloud data generated by a measurement device provided on a ship;

extracting data obtained by measuring a position which is a predetermined distance away from a shore and which is within a predetermined distance from a measurement position of the measurement device, as a water-surface reflection data measured by reflection at a water surface; and

calculating a water-surface height based on the water-surface reflection data.

10. A storage medium which stores the program according to claim 9.

FIG. 1

FIG. 2

<u>1</u>

INTERFACE ── 11

MEMORY ── 12

MAP DB ── 10

VD ── VOXEL DATA

CONTROLLER ── 13

SELF-POSITION ESTIMATION UNIT ── 15

OBSTACLE /SHIP-WAVE DETECTION UNIT ── 16

FIG. 3

FIG. 4

VOXEL DATA

| VOXEL ID |
| VOXEL COORDINATES |
| MEAN VECTOR |
| COVARIANCE MATRIX |

## FIG. 5A

BACK

3

## FIG. 5B

BACK

3

## FIG. 5C

BACK

3

WATER-SURFACE
POSITION

SEARCH
RANGE

SHIP-WAVE

BUOY

# FIG. 6A

FROM
ABOVE

# FIG. 6B

INCORRECT
DATA

FIG. 7A

3

102

BACK

102

CALCULATE AVERAGE
OF DATA NEAR SHIP

DO NOT USE
DATA CLOSE
TO SHORE

FIG. 7B

DIRECT WATER-SURFACE
REFLECTION DATA

FIG. 8A

EXTRACT CLUSTER BY CLUSTERING
↓
DETECT IN FRAMES OF PLURAL TIMES
↓
DETERMINE TO BE OBSTACLE

FIG. 8B

3

111

OBSTACLE
(BUOY)

112

Ho

## FIG. 9A

EXTRACT STRAIGHT-LINE
BY HOUGH TRANSFORM
↓
DETECT IN FRAMES OF PLURAL TIMES
↓
DETERMINE TO BE SHIP-WAVE

## FIG. 9B

FIG. 10

16

POINT CLOUD DATA → SEARCH RANGE SETTING 121 → STRAIGHT-LINE EXTRACTION 122 → SHIP-WAVE DETECTION 123 → SHIP-WAVE INFORMATION CALCULATION 124 → SHIP-WAVE INFORMATION

SHIP-WAVE DATA REMOVAL 125

EUCLIDEAN CLUSTERING 126 → OBSTACLE DETECTION 127 → OBSTACLE INFORMATION CALCULATION 128 → OBSTACLE INFORMATION

OBSTACLE DATA REMOVAL 129

MEAN /VARIANCE CALCULATION 130 → TIME FILTER 131 → WATER-SURFACE POSITION ESTIMATION 132

FIG. 11A

FIG. 11B

FIG. 11C

FIG. 12

SIMULATION RESULT (MAGNIFIED)

STRAIGHT-LINE FORMULA
BY HOUGH TRANSFORM

$0.342x + 0.940y - 9 = 0$

$y = -0.364x + 9.574$

UP: EQUATION OF STRAIGHT-LINE
DOWN: (EQUATION OF y= )

BLACK LINE: HULL
BLACK POINT: DETECTION DATA

CALCULATE STRAIGHT-LINE FORMULA
BY PRINCIPAL COMPONENT ANALYSIS

142

141

STRAIGHT-LINE FORMULA
BY PRINCIPAL COMPONENT ANALYSIS

$-0.367x - 0.930y + 9.253 = 0$

$y = -0.394x + 9.946$

FIG. 13A                 FIG. 13B                 FIG. 13C

FIG. 14A

POINT CLOUD DATA

DETECTED CLUSTER

FIG. 14B

DATA AFTER REMOVING
SHIP-WAVE DATA

DETECTED CLUSTER

FIG. 15

NEAR OBJECT

FAR OBJECT

FIG. 16A

GROUPING THRESHOLD = 2.0m
POINT-NUMBER THRESHOLD = 6 POINTS

FIG. 16B

GROUPING THRESHOLD = a × DATA DISTANCE
POINT-NUMBER THRESHOLD
= b/DISTANCE TO CENTER OF GRAVITY OF GROUP

CLUSTER 1

CLUSTER 2

## FIG. 17A

DATA OF SHIP-WAVE/OBSTACLE

## FIG. 17B

REMOVE SHIP-WAVE/OBSTACLE

FIG. 18

(STATE 1)

(STATE 2)

SHIP-WAVE

(STATE 3)

(STATE 4)

OBSTACLE

(STATE 5)

# FIG. 19

```
┌─────────────────────────────────────────────────────────────┐
│         OBSTACLE/SHIP-WAVE DETECTION PROCESSING              │
└─────────────────────────────────────────────────────────────┘
```

S11 | ACQUIRE POINT CLOUD DATA

S12 | DETERMINE SEARCH RANGE FROM ESTIMATED WATER-SURFACE POSITIONS UP TO ONE TIME & STANDARD DEVIATION. SEARCH RANGE ± 3σ

S13 | EXTRACT POINT CLOUD DATA IN SEARCH RANGE TO USE AS SEARCH DATA FOR SHIP-WAVE DETECTION

S14 | SHIP-WAVE DETECTION PROCESS

S15 | REMOVE SHIP-WAVE DATA FROM SEARCH DATA TO PREPARE SEARCH DATA FOR OBSTACLE DETECTION

S16 | OBSTACLE DETECTION PROCESS

S17 | REMOVE OBSTACLE DATA FROM SEARCH DATA TO PREPARE SEARCH DATA FOR WATER-SURFACE POSITION ESTIMATION

S18 | WATER-SURFACE POSITION ESTIMATION PROCESS

S19 | SHIP-WAVE INFORMATION CALCULATION PROCESS

S20 | OBSTACLE INFORMATION CALCULATION PROCESS

S21 | SIMILAR SHIP-WAVE DETECTED IN PLURAL FRAMES ? — No

Yes

S22 | DETERMINE AS SHIP-WAVE & OUTPUT TO HULL SYSTEM

S23 | SIMILAR OBSTACLE DETECTED IN PLURAL FRAMES ? — No

Yes

S24 | DETERMINE AS SHIP-WAVE & OUTPUT TO HULL SYSTEM

```
┌─────────────────────────────────────────────────────────────┐
│                           END                               │
└─────────────────────────────────────────────────────────────┘
```

FIG. 20

SHIP-WAVE DETECTION PROCESS

S101 — USE SEARCH DATA OF EACH POINT AS 2-DIMENSIONAL DATA
BY IGNORING Z-VALUE

S102 — FOR ALL SEARCH POINTS, CHANGE $\theta$ IN RANGE 0~180° BY FORMULA (7)
TO CALCULATE $(\theta, \rho)$. $\theta \& \rho$ ARE EXPRESSED AS INTEGERS.

S103 — EXAMINE NUMBER OF $(\theta, \rho)$ AND EXTRACT MAXIMUM VALUE GREATER
THAN PREDETERMINED VALUE. IF n DETECTED, $(\theta_1, \rho_1) \sim (\theta_n, \rho_n)$.

S104 — SUBSTITUTE EXTRACTED $(\theta_1, \rho_1) \sim (\theta_n, \rho_n)$ TO FORMULA (7)
TO GENERATE N STRAIGHT-LINES $L_1 \sim L_n$

S105 — CALCULATE DISTANCES TO n GENERATED STRAIGHT-LINES FOR ALL
SEARCH POINTS AGAIN, DETERMINE DATA WHOSE DISTANCE IS EQUAL TO
OR SMALLER THAN PREDETERMINED DISTANCE AS SHIP-WAVE DATA

S106 — USE 3-DIMENSIONAL DATA INCLUDING Z-VALUE AS SHIP-WAVE DATA

S107 — CALCULATE FORMULAS OF n STRAIGHT-LINES BY LEAST SQUIRE OR
PRINCIPLE COMPONENT ANALYSIS USING EXTRACTED SHIP-WAVE DATA

END

FIG. 21

# FIG. 22

OBSTACLE DETECTION PROCESS

S111  FOR ALL SEARCH DATA, CALCULATE
POINT-TO-POINT DISTANCE TO OTHER SEARCH DATA

S112  SELECT FIRST TARGET DATA

S113  CALCULATE DISTANCE r1 FROM SHIP TO TARGET DATA, AND CALCULATE
GROUPING THRESHOLD T1 USING PREDETERMINED FACTOR a. T1=A·r1

S114  PUT DATA WHOSE POINT-TO-POINT DISTANCE IS SMALLER THAN
GROUPING THRESHOLD T1 INTO SAME GROUP

S115  ALL SEARCH DATA TARGETED ?

Yes

No

S116  SELECT NEXT TARGET DATA

S117  CALCULATE CENTER OF GRAVITY POSITION FOR EXTRACTED GROUPS
AND CALCULATE DISTANCE r2 TO CENTER OF GRAVITY POSITION. SET
POINT-NUMBER THRESHOLD USING PREDETERMINED FACTOR b. T2=B/r2

S118  DETERMINE GROUP WHOSE DATA NUMBER IS LARGER THAN POINT
NUMBER THRESHOLD T2 AS CLUSTER, AND DETERMINE CLUSTER
AS OBSTACLE

END

# FIG. 23

```
         ┌─────────────────────────────────────────────────────────┐
         │      WATER-SURFACE POSITION ESTIMATION PROCESS          │
         └─────────────────────────────────────────────────────────┘
                                    │
                                    ▼
         ┌─────────────────────────────────────────────────────────┐
  S121   │  DETERMINE DATA FAR FROM SHORE, NEAR SHIP & EXIST NEAR  │
         │  WATER-SURFACE AS WATER-SURFACE REFLECTION DATA         │
         └─────────────────────────────────────────────────────────┘
                                    │
                                    ▼
         ┌─────────────────────────────────────────────────────────┐
         │  ACQUIRE WATER-SURFACE REFLECTION DATA OF PLURAL        │
  S122   │  SCAN FRAMES UP TO PREDETERMINED DATA NUMBER.          │
         │  CALCULATE MEAN/VARIANCE IN Z-DIRECTION THEREOF.       │
         └─────────────────────────────────────────────────────────┘
                                    │
    S123                            ▼
         ◇─────────────────────────────────────────────────────◇       No
         ◇      VARIANCE < PREDETERMINED VALUE ?                ◇─────────┐
         ◇─────────────────────────────────────────────────────◇         │
                                    │  Yes                                │
                                    ▼                                     │
         ┌─────────────────────────────────────────────────────────┐     │
         │  UPDATE WATER-SURFACE POSITION BY FILTERING PROCESS    │     │
  S124   │  OF MEAN VALUE OF Z-VALUE & ESTIMATED WATER-SURFACE    │     │
         │  POSITIONS IN THE PAST                                 │     │
         └─────────────────────────────────────────────────────────┘     │
                                    │◄────────────────────────────────────┘
                                    ▼
         ┌─────────────────────────────────────────────────────────┐
  S125   │  OUTPUT CALCULATED WATER-SURFACE POSITION & VARIANCE   │
         └─────────────────────────────────────────────────────────┘
                                    │
                                    ▼
         ┌─────────────────────────────────────────────────────────┐
         │                         END                             │
         └─────────────────────────────────────────────────────────┘
```

# FIG. 24A

SHIP-WAVE INFORMATION CALCULATION PROCESS

S131 | CALCULATE SHORTEST DISTANCE TO STRAIGHT-LINE AS SHIP-WAVE DISTANCE. DETERMINE POSITION WITH THE DISTANCE AS SHIP-WAVE POSITION. CALCULATE INCLINATION FROM FACTORS OF STRAIGHT-LINE AS SHIP-WAVE ANGLE.

S132 | CALCULATE AVERAGE OF Z-COORDINATE USING POINTS HIGHER THAN ESTIMATED WATER-SURFACE POSITION. SUBTRACT WATER-SURFACE POSITION TO CALCULATE HEIGHT OF SHIP-WAVE FROM WATER SURFACE. (MAXIMUM VALUE MAY BE USED INSTEAD OF AVERAGE)

END

# FIG. 24B

# FIG. 24C

# FIG. 25

OBSTACLE INFORMATION CALCULATION PROCESS

S141 | EXTRACT CLUSTER OF SHORTEST DISTANCE AS OBSTACLE POSITION. CALCULATE DISTANCE TO THE DATA AS OBSTACLE DISTANCE. CALCULATE OBSTACLE ANGLE FROM COORDINATES OF THE DATA.

S142 | EXTRACT TWO POINTS FARTHEST APART FROM CLUSTER DATA IN X-Y 2-DIMENSIONAL PLANE AND USE THE DISTANCE AS LATERAL SIZE OF OBSTACLE. SUBTRACT ESTIMATED WATER-SURFACE POSITION FROM Z-COORDINATE OF HIGHEST POINT IN CLUSTER DATA TO CALCULATE HEIGHT OF OBSTACLE FROM WATER SURFACE.

END

# FIG. 26

HEIGHT IS DIFFERENT
IN STARBOARD AND PORT

EP 4 310 550 A1

FIG. 27

**CALCULATE STRAIGHT-LINE WITHOUT PROCESS 4**

THESE TWO POINTS ARE NOT EXTRACTED BECAUSE THE DISTANCE OF HOUGH TRANSFORM FROM STRAIGHT-LINE IS FARTHER THAN PREDETERMINED VALUE.

**CONVERGED STRAIGHT-LINE GENERATION BY EXECUTING PROCESS 4**

THESE TWO POINTS ARE EXTRACTED BECAUSE DISTANCE OF PRIMARY COMPONENT ANALYSIS IS NEARER THAN PREDETERMINED VALUE.

STRAIGHT-LINE FORMULA:

$-0.367x - 0.930y + 9.253 = 0$

(FORMULA OF Y=): $y = -0.394x + 9.946$

$-0.370x - 0.929y + 9.276 = 0$

$y = -0.398x + 9.985$

SLIGHTLY CORRECTED TO CORRECT FORMULA

43

**INTERNATIONAL SEARCH REPORT**

| International application No. |
| --- |
| PCT/JP2021/010365 |

A. CLASSIFICATION OF SUBJECT MATTER
G01S 17/89(2020.01)i; G01S 17/95(2006.01)i
FI: G01S17/89; G01S17/95

According to International Patent Classification (IPC) or to both national classification and IPC

B. FIELDS SEARCHED

Minimum documentation searched (classification system followed by classification symbols)
G01S 7/00 – G01S 7/51; G01S 13/00 – G01S 13/95; G01S 17/00 – G01S 17/95

Documentation searched other than minimum documentation to the extent that such documents are included in the fields searched

| | |
| --- | --- |
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>Y | JP 2011-530712 A (JK VISION AS) 22 December 2011 (2011-12-22) paragraphs [0001], [0008]-[0009], [0016]-[0018], fig. 1-2 | 1, 8-10<br>2-7 |
| Y | CN 109917414 A (BEIJING SEECOOL TECHNOLOGY CO., LTD.) 21 June 2019 (2019-06-21) paragraphs [0050]-[0060], fig. 1-2 | 2-7 |
| Y | WO 2017/204076 A1 (FURUNO ELECTRIC CO) 30 November 2017 (2017-11-30) paragraphs [0070]-[0077], fig. 14-16 | 4-5 |
| Y | WO 2014/192530 A1 (FURUNO ELECTRIC CO., LTD) 04 December 2014 (2014-12-04) paragraphs [0032]-[0034] | 4-5 |

☒ Further documents are listed in the continuation of Box C.    ☒ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>21 May 2021 (21.05.2021) | Date of mailing of the international search report<br>01 June 2021 (01.06.2021) |
| --- | --- |
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**

International application No.

PCT/JP2021/010365

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2006-292429 A (MITSUBISHI ELECTRIC CORP) 26 October 2006 (2006-10-26) paragraph [0019], fig. 3 | 4-5 |
| Y | JP 2012-237592 A (IHI CORP) 06 December 2012 (2012-12-06) paragraphs [0020]-[0041], fig. 1-3 | 4, 6 |
| A | JP 2016-206152 A (FURUNO ELECTRIC CO) 08 December 2016 (2016-12-08) entire text, all drawings | 1-10 |
| A | JP 2017-133902 A (UNIV CHIBA) 03 August 2017 (2017-08-03) entire text, all drawings | 1-10 |
| A | JP 2008-281380 A (IHI CORP) 20 November 2008 (2008-11-20) entire text, all drawings | 1-10 |
| A | 林昌奎，アンテナパターンを利用した潮位・津波観測，電子情報通信学会技術研究報告，09 December 2011, vol. 111, no. 355, pp. 37-40, ISSN 0913-5685, entire text, all drawings, (RHEEM, Chan-Kyu. Tsunami and tide level measurement using antenna pattern. IEICE Technical Report.) | 1-10 |

Form PCT/ISA/210 (continuation of second sheet) (January 2015)

INTERNATIONAL SEARCH REPORT

Information on patent family members

International application No.

PCT/JP2021/010365

| Patent Documents referred in the Report | Publication Date | Patent Family | Publication Date |
|---|---|---|---|
| JP 2011-530712 A | 22 Dec. 2011 | US 2011/0128162 A1 paragraphs [0001], [0010]-[0013], [0031]-[0033], fig. 1-2 WO 2010/024683 A1 CA 2732418 A1 | |
| CN 109917414 A | 21 Jun. 2019 | (Family: none) | |
| WO 2017/204076 A1 | 30 Nov. 2017 | (Family: none) | |
| WO 2014/192530 A1 | 04 Dec. 2014 | (Family: none) | |
| JP 2006-292429 A | 26 Oct. 2006 | (Family: none) | |
| JP 2012-237592 A | 06 Dec. 2012 | (Family: none) | |
| JP 2016-206152 A | 08 Dec. 2016 | (Family: none) | |
| JP 2017-133902 A | 03 Aug. 2017 | (Family: none) | |
| JP 2008-281380 A | 20 Nov. 2008 | (Family: none) | |

Form PCT/ISA/210 (patent family annex) (January 2015)

**EP 4 310 550 A1**